# EUROPÄISCHE PATENTANMELDUNG

(11) **EP 4 300 418 A1**
(43) Veröffentlichungstag der Anmeldung: **03.01.2024**
(21) Anmeldenummer: 23182491.3
(22) Anmeldetag: 29.06.2023
(51) Int. Cl.: G06T 7/00

(54) **SYSTEM ZUR UNTERSTÜTZUNG EINES NUTZERS BEI DER BILDBASIERTEN ERKENNUNG EINER GEWEBEENTARTUNG**

(30) Priorität: 30.06.2022 DE 102022116407
(71) Anmelder: Eissing-Al-Mukahal, Ali, 30171 Hannover (DE); Wilkens, Ludwig, 30539 Hannover (DE)
(72) Erfinder: Eissing-Al-Mukahal, Ali, 30171 Hannover (DE); Wilkens, Ludwig, 30539 Hannover (DE)
(74) Vertreter: Eisenführ Speiser

(57) **Zusammenfassung**

Die Erfindung betrifft ein System (100) zur Unterstützung eines Nutzers bei der bildbasierten Erkennung einer Gewebeentartung. Das System umfasst eine Bildbereitstellungseinheit (101), die eingerichtet ist, eines einer Mehrzahl an Schnittbildern (10, 10'; 10") einer Gewebeprobe bereitzustellen, und eine Klassifizierungseinheit (102), die eingerichtet ist, mittels eines trainierten künstlichen neuronalen Netzes Bildbereiche (20) des Schnittbildes gemäß ihrer Wahrscheinlichkeit dafür zu klassifizieren, dass sie entartetes Gewebe (30) zeigen. Zudem umfasst das System eine Anzeigeeinheit (103), die eingerichtet ist, das Schnittbild in einem Analysebereich (40, 41; 42) einer Anzeige (50) so anzuzeigen, dass Bildbereiche des Schnittbildes, die gemäß der Klassifizierung der Klassifizierungseinheit entartetes Gewebe zeigen, in dem im Analysebereich angezeigten Schnittbild markiert sind, und eine Feststellungseinheit (104), die eingerichtet ist, eine Gewebeentartung in der Gewebeprobe basierend auf einer Nutzereingabe festzustellen, die indikativ für eine Bestätigung des Nutzers dessen ist, dass einer der markierten Bildbereiche entartetes Gewebe zeigt.

## Beschreibung

Die Erfindung bezieht sich auf ein System und ein Verfahren zur Unterstützung eines Nutzers bei der bildbasierten Erkennung einer Gewebeentartung. Zudem bezieht sich die Erfindung auf Systeme und Verfahren zum Erzeugen von Trainingsdaten für ein künstliches neuronales Netz. Die Erfindung bezieht sich auch auf ein System und ein Verfahren zum Trainieren eines künstlichen neuronalen Netzes. Ebenfalls bezieht sich die Erfindung auf den Systemen und Verfahren entsprechende Computerprogramme.

Wenngleich die Möglichkeiten der vollständig automatisierten Bildanalyse aufgrund von Fortschritten insbesondere im Bereich der künstlichen Intelligenz stetig steigen, ist es üblicherweise weiterhin notwendig, Menschen bei der bildbasierten Erkennung von Gewebeentartungen einzubinden. Besonders bewährt hat sich in der onkologischen Diagnostik ein Zusammenspiel von Mensch und Maschine, bei dem der Mensch durch die in ihrer Qualität stetig steigenden maschinenbasierten Mittel zur bildbasierten Erkennung von Gewebeentartungen unterstützt wird. Die Maschine kann in einem solchen Zusammenspiel also als ein Werkzeug für den Menschen angesehen werden. Auch mit diesem Werkzeug bleibt die Aufgabe der bildbasierten Erkennung von Gewebeentartungen für den Menschen allerdings eine anspruchsvolle Aufgabe, die es zudem im klinischen Alltag zu bewältigen gilt.

Im klinischen Alltag ist es nicht nur wünschenswert, Gewebeentartungen sehr sicher, sondern auch möglichst einfach und schnell zu erkennen. Eine der Erfindung zugrundeliegende Aufgabe ist es daher, die bildbasierte Erkennung von Gewebeentartungen nicht nur sicher, sondern auch effizient zu gestalten. Diese Aufgabe wird durch die Systeme und Verfahren der nachfolgend beschriebenen Aspekte gelöst.

Gemäß einem ersten Aspekt der Erfindung ist ein System zur Unterstützung eines Nutzers bei der bildbasierten Erkennung einer Gewebeentartung vorgesehen, wobei das System eine Bildbereitstellungseinheit umfasst, die eingerichtet ist, eines einer Mehrzahl an Schnittbildern einer Gewebeprobe bereitzustellen, und zudem eine Klassifizierungseinheit, die eingerichtet ist, mittels eines trainierten künstlichen neuronalen Netzes Bildbereiche des Schnittbildes gemäß ihrer Wahrscheinlichkeit dafür zu klassifizieren, das sie entartetes Gewebe zeigen. Das System umfasst ferner eine Anzeigeeinheit, die eingerichtet ist, das Schnittbild in einem Analysebereich einer Anzeige so anzuzeigen, dass Bildbereiche des Schnittbildes, die gemäß der Klassifizierung der Klassifizierungseinheit entartetes Gewebe zeigen, in dem im Analysebereich angezeigten Schnittbild markiert sind. Weiterhin umfasst das System eine Feststellungseinheit, die eingerichtet ist, eine Gewebeentartung in der Gewebeprobe basierend auf einer Nutzereingabe festzustellen, die indikativ für eine Bestätigung des Nutzers dessen ist, dass einer der markierten Bildbereiche entartetes Gewebe zeigt. Das System zur Unterstützung eines Nutzers bei der bildbasierten Erkennung einer Gewebeentartung wird im Folgenden auch als Unterstützungssystem bezeichnet werden.

Dadurch, dass die Bildbereiche von der Klassifizierungseinheit mittels eines trainierten künstlichen neuronalen Netzes gemäß ihrer Wahrscheinlichkeit dafür klassifiziert werden, dass sie entartetes Gewebe zeigen, wobei die Bildbereiche, die gemäß der Klassifizierung der Klassifizierungseinheit entartetes Gewebe zeigen, markiert angezeigt werden, und dass der Nutzer durch Bestätigen eines markierten und damit von der Klassifizierungseinheit als entartetes Gewebe zeigend klassifizierten Bildbereichs die Feststellungseinheit dazu veranlassen kann, eine Gewebeentartung fürdie Gewebeprobe festzustellen, können Gewebeproben sicher und effizient auf Gewebeentartungen hin geprüft werden. Der Nutzer kann wahrscheinlich entartetes Gewebe zeigende Bildbereiche durch die Markierung nicht nur schnell finden. Vielmehr muss er darüber hinaus lediglich bestätigen, dass einer der markierten Bildbereiche entartetes Gewebe zeigt, um zu einer Diagnose für die Gewebeprobe zu gelangen, was eine beträchtliche Arbeitsersparnis bedeuten kann. Dabei hat sich gezeigt, dass mit der gewonnenen Arbeitsersparnis keine Beeinträchtigung der Sicherheit einhergeht, mit der Gewebeentartungen erkannt werden können. Vielmehr können durch die Kombination der Klassifizierung mittels des neuronalen Netzes und die Bestätigung durch den Nutzer Gewebeentartungen besonders sicher erkannt werden. Die bildbasierte Erkennung von Gewebeentartungen kann durch das vorgesehene System demnach sicher und effizient gestaltet werden.

Die Bildbereitstellungseinheit kann eingerichtet sein, die Mehrzahl an Schnittbildern der Gewebeprobe zunächst zu empfangen, beispielsweise von einem bildgebenden System, und diese daraufhin bereitzustellen. Die Bildbereitstellungseinheit kann auch ein Speicher sein, in dem zuvor aufgenommene Schnittbilder gespeichert wurden und aus dem die Bilder abgerufen werden können, um sie so bereitzustellen. Die Bildbereitstellungseinheit kann auch Teil des bildgebenden Systems sein, diesem entsprechen oder es umfassen. Die bereitgestellten Schnittbilder können virtuelle Schichten oder Schnitte eines dreidimensionalen Bildes der Gewebeprobe entsprechen, das durch das bildgebende System aufgenommen worden sein kann, wobei die Gewebeprobe in diesem Fall allgemeiner zu verstehen ist und nicht tatsächlich aus dem umliegenden Gewebe entnommen worden sein muss. Bevorzugt entsprechen die bereitgestellten Schnittbilder aber Bildern von physischen Schichten, die zuvor physisch aus der Gewebeprobe entnommen worden sind, d. h. beispielsweise herausgeschnitten worden sind. Die Schichten können beispielsweise zunächst eingefärbt und anschließend unter einem Mikroskop abgebildet worden sein und damit insbesondere histologischen Bildern entsprechen. Der Begriff "Schicht" ist in diesem Zusammenhang nicht zwingend als "zusammenhängende Schicht" zu verstehen. Vielmehr können die der Gewebeprobe entnommenen Gewebeteile beispielsweise bei der Präparierung auf einem für die mikroskopische Abbildung geeigneten Objektträger eine hinsichtlich der Anwesenheit von Gewebe unzusammenhängende Schicht auf dem Objektträger bilden.

Es versteht sich, dass der Vorgang des Erstellens der Schnittbilder, also beispielsweise das Abbilden der auf einem Objektträger präparierten, der jeweiligen Gewebeprobe entnommenen Gewebeteile durch ein digitales Mikroskop, auch als Digitalisierung verstanden kann. Die erstellten Schnittbilder sind bevorzugt farbige Bilder, beispielsweise im RGB-Format. Wurden die Schnittbilder mikroskopisch erstellt, können sie Bilder des gesamten Objektträgers sein, sodass sie auch als Whole-Slide-Image bezeichnet werden könnten. In dem Fall kann das Mikroskop ein Whole-Slide-Scanner sein.

Die Schnittbilder können aber auch mikroskopische Aufnahmen von lediglich lokalen Bereichen, d.h. begrenzten Gebieten, von auf einem Objektträger präpariertem Gewebe sein. Das Mikroskop kann beispielsweise ein manuell steuerbares Mikroskop mit einer Optik sein, durch die einerseits ein Nutzer Gewebebereiche betrachten kann, die andererseits ein dem Nutzer erscheinendes Bild aber auch zur Digitalisierung bereitstellt. So können etwa von dem Nutzer ansteuerbare lokale Gewebebereiche gleichzeitig auf das Auge des Nutzers und auf einen digitalen Bildsensor abgebildet werden, der über eine Schnittstelle mit einer Speicher- und/oder Anzeigevorrichtung zur Speicherung und/oder Anzeige der von dem Nutzer über die Optik des Mikroskops wahrgenommenen Bilder verbunden ist. Der Bildsensor kann in das Mikroskop integriert oder Teil einer separaten Digitalkamera sein, die an einen optischen Ausgang des Mikroskops anschließbar ist. Ein solcher optischer Ausgang kann an dem Mikroskop insbesondere separat von einem Okular des Mikroskops vorgesehen sein, über das der Nutzer Gewebebereiche betrachten kann. Grundsätzlich könnte die Digitalisierung aber auch überdas Okular vorgenommen werden, indem eine Digitalkamera beispielsweise an einen von zwei optischen Ausgängen des Okulars angeschlossen wird.

Die bereitgestellten Schnittbilder können auch Schnittbilder mehr als einer Gewebeprobe sein. Dabei sind die Gewebeproben bevorzugt demselben medizinischen "Fall" zugeordnet, also insbesondere demselben Patienten. Beispielsweise können die Gewebeproben an verschiedenen Stellen ein und desselben Organs eines Patienten entnommen worden sein, oder allgemeiner an verschiedenen Stellen des Körpers, aber aus gleichartigem Gewebe. Insbesondere können die Gewebeproben verschiedenen Lymphknoten entnommen worden sein. Auch ein und dasselbe Schnittbild kann Gewebe verschiedener Gewebeproben zeigen.

Die Anzeigeeinheit kann eingerichtet sein, die Anzeige zu veranlassen, die Schnittbilder in einer Freigabedarstellung gemeinsam darzustellen. Beispielsweise kann die Freigabedarstellung die erste dem Nutzer für eine gegebene Gewebeprobe angezeigte Darstellung sein. Die Schnittbilder können in der Freigabedarstellung beispielsweise in niedriger Auflösung, d. h. als Piktogramme, dargestellt werden. Bevorzugt weist die Freigabedarstellung eine oder mehrere Schaltflächen auf, insbesondere je angezeigtem Schnittbild eine Schaltfläche, über die der Nutzer die Schnittbilder für alle weiteren Bearbeitungsschritte freigeben kann. So können etwa Schnittbilder mit auffälligen Artefakten initial aussortiert werden, was die für die folgende Bearbeitung benötigte Zeit verringern kann.

Die Schnittbilder können bereits von der Bildbereitstellungseinheit oder erst von der Klassifizierungseinheit in die Bildbereiche aufgeteilt werden. Ebenso können die Schnittbilder, beispielsweise im Rahmen einer weitergehenden Vorverarbeitung, durch eine von der Bildbereitstellungseinheit und der Klassifizierungseinheit verschiedene Vorverarbeitungseinheit des Systems in die Bildbereiche aufgeteilt werden. Ein Bildbereich eines Schnittbildes kann grundsätzlich eine beliebige Form aufweisen. Allerdings kann es vorteilhaft sein, dass die Schnittbilder in Bildbereiche gleicher Form und/oder Größe unterteilt sind, das heißt beispielsweise in kachelförmige Bildbereiche gleicher Größe, wobei die Größe beispielsweise 512 × 512 Pixel betragen kann. Ebenso können die Bildbereiche bevorzugt so ausgewählt werden, dass sie sich nicht überlappen und/oder dass die Summe der Bildbereiche das jeweilige gesamte Schnittbild vollständig abdeckt. Das künstliche neuronale Netz kann mit entsprechend geformten Bildbereichen trainiert worden sein.

Die Klassifizierungseinheit kann dem trainierten künstlichen neuronalen Netz entsprechen, dieses umfassen oder lediglich auf dieses zugreifen. Das künstliche neuronale Netz, das als "Gewebeklassifizierer" bezeichnet werden kann, ist trainiert, Bildbereiche in Schnittbildern wie jenen, die von der Bildbereitstellungseinheit bereitgestellt werden können, gemäß ihrer Wahrscheinlichkeit dafür zu klassifizieren, dass sie entartetes Gewebe zeigen. Das trainierte künstliche neuronale Netz ist also in der Lage, die Bildbereiche zu klassifizieren, wobei die Klassifizierung einer Wahrscheinlichkeit dafür entspricht, dass die Bildbereiche entartetes Gewebe zeigen. Die Klassifizierung kann also beispielsweise Wahrscheinlichkeitswerten entsprechen, oder aber einer binären Klassifizierung, die einer Entscheidung darüber entspricht, ob der jeweilige Bildbereich entartetes Gewebe zeigt oder nicht. Eine solche Entscheidung kann basierend auf einer vorher ermittelten Wahrscheinlichkeit getroffen werden, wie etwa durch Vergleich mit einer vorbestimmten Wahrscheinlichkeitsschwelle.

Die von dem Gewebeklassifizierer benötigte Zeit, um für einen Bildbereich zu entscheiden, ob er entartetes Gewebe enthält oder nicht, kann im Bereich von Millisekunden liegen. Zum Beispiel wurde für einen Bildbereich von 512 × 512 Pixeln eine Zeit von unter zwei Millisekunden gemessen. Dabei versteht es sich, dass die von dem Gewebeklassifizierer benötigten Analysezeiten abhängig von der konkreten Implementierung sein können.

Das künstliche neuronale Netz kann in seiner Struktur einem bekannten künstlichen neuronalen Netz oder einer Kombination, insbesondere Aneinanderreihung, bekannter künstlicher neuronaler Netze entsprechen. Beispielsweise kann das künstliche neuronale Netz ein vorbestimmtes Convolutional Neural Network (CNN) oder Generative Adversarial Network (GAN) als "Kern-Netz" aufweisen, das eingerichtet ist, die Bildbereiche als Eingangsdaten zu erhalten und daraufhin Merkmale der Bildbereiche zu extrahieren und diese als Ausgangsdaten auszugeben. Das künstliche neuronale Netz kann zudem eine Mehrzahl versteckter Schichten, beispielsweise Hidden Dense Layers, aufweisen, die eingerichtet sind, die den extrahierten Merkmalen entsprechenden Ausgangsdaten als Eingangsdaten zu erhalten, diese entsprechend einer Rekombination der extrahierten Merkmale zu verarbeiten und die verarbeiteten Daten, die den rekombinierten Merkmalen entsprechen, über eine Ausgangsschicht des künstlichen neuronalen Netzes als Ausgangsdaten auszugeben. Die Ausgangsschicht kann zwei Neuronen aufweisen, die einer binären Klassifikation des jeweils verarbeiteten Bildbereichs in "zeigt entartetes Gewebe" und "zeigt kein entartetes Gewebe" entsprechen. Die Neuronen der Ausgangsschicht können eingerichtet sein, eine Sigmoid-Aktivierungsfunktion anzuwenden. Dies erlaubt eine Interpretation der von der Ausgangsschicht ausgegebenen Ausgangsdaten als Wahrscheinlichkeit dafür, dass der jeweils verarbeitete Bildbereich in die jeweilige Klasse, d.h. "zeigt entartetes Gewebe" bzw. "zeigt kein entartetes Gewebe", fällt.

Die Gewebeentartung kann sich insbesondere auf eine Metastase eines kolorektalen Karzinoms in einem Lymphknoten beziehen. Das entartete Gewebe kann also insbesondere Gewebe einer Metastase eines kolorektalen Karzinoms in einem Lymphknoten sein. Es versteht sich, dass in diesem Fall das künstliche neuronale Netz bevorzugt anhand von Schnittbildern teilweise mit Metastasen kolorektaler Karzinome befallener Lymphknoten trainiert wurde.

Die Anzeige, die den Analysebereich umfasst, kann ein Bildschirm oder ein von einem Bildschirm angezeigtes Fenster sein. Die Markierung der Bildbereiche des in dem Analysebereich der Anzeige angezeigten Schnittbildes, die gemäß der Klassifizierung der Klassifizierungseinheit entartetes Gewebe zeigen, kann einer für den Nutzer optisch wahrnehmbaren Markierung entsprechen.

Die Feststellungseinheit kann die Bestätigung des Nutzers dessen, dass einer der markierten Bildbereiche entartetes Gewebe zeigt, über eine Nutzerschnittstelle empfangen, wobei die Nutzerschnittstelle Teil des Systems sein kann oder auch Teil der Anzeige, falls die Anzeige beispielsweise ein Touchscreen ist. Die Feststellung der Gewebeentartung kann als eine Bestätigung des von dem trainierten künstlichen neuronalen Netz erzielten Klassifikationsergebnisses verstanden werden.

Bevorzugt ist die Bereitstellungseinheit eingerichtet, die Mehrzahl an Schnittbildern der Gewebeprobe bereitzustellen, wobei die Klassifizierungseinheit eingerichtet ist, mittels des trainierten künstlichen neuronalen Netzes in jedem der Schnittbilder der Gewebeprobe Bildbereiche gemäß ihrer Wahrscheinlichkeit dafür zu klassifizieren, das sie entartetes Gewebe zeigen, wobei die Anzeigeeinheit eingerichtet ist, in einem Auswahlbereich der Anzeige jeweils einem der Mehrzahl an Schnittbildern entsprechende Auswahlelemente anzuzeigen und als das im Analysebereich anzuzeigende Schnittbild dasjenige auszuwählen, das einem durch den Nutzer ausgewählten Auswahlelement entspricht. Der Nutzer kann also über die Auswahlelemente aus verschiedenen Schnittbildern der Gewebeprobe ein im Analysebereich anzuzeigendes Schnittbild auswählen. Dies kann die Sicherheit erhöhen, mit der die Gewebeentartung festgestellt wird, da der Nutzer ein Schnittbild auswählen kann, in dem er sich sicher ist, entartetes Gewebe erkennen zu können.

Die Gesamtheit aller Schnittbilder für eine gegebene Gewebeprobe, einschließlich der Klassifizierung der in den Schnittbildern enthaltenen Bildbereiche durch die Klassifizierungseinheit, kann auch als ein Fall verstanden werden, sodass der Auswahlbereich als eine geordnete Übersicht über einen Fall verstanden werden kann.

Die Anzeigeeinheit ist bevorzugt eingerichtet, die den Schnittbildern entsprechenden Auswahlelemente in dem Auswahlbereich nach einer den jeweiligen Schnittbildern zugeordneten Relevanz geordnet anzuzeigen, wobei die Relevanz eines Schnittbildes anhand eines Relevanzparameters gemessen wird, der indikativ für einen Anteil der Bildbereiche an dem jeweiligen Schnittbild ist, die gemäß der Klassifizierung der Klassifizierungseinheit entartetes Gewebe zeigen. Es hat sich gezeigt, dass die Sicherheit, mit der entartetes Gewebe in einem Schnittbild erkannt werden kann, davon abhängt, wieviel entartetes Gewebe in dem Schnittbild tatsächlich gezeigt ist. Durch die geordnete Anzeige der Schnittbilder in dem Auswahlbereich kann der Nutzer leicht jene Schnittbilder finden, in denen er mit höherer Wahrscheinlichkeit entartetes Gewebe sicher erkennen kann. Dies erhöht die Effizienz, mit der Gewebeproben auf Gewebeentartungen hin geprüft werden können, weiter.

Beispielsweise können die einer gegebenen Gewebeprobe zugehörigen Schnittbilder in dem Auswahlbereich der Anzeige in Form von listenartig angeordneten Piktogrammen angezeigt werden, wobei der Relevanzparameter die Position der den jeweiligen Schnittbildern zugeordneten Piktogramme in der Liste bestimmt. Als Relevanzparameter kann beispielsweise ein zahlenmäßiges oder flächenmäßiges Verhältnis zwischen den Bildbereichen, die gemäß der Klassifizierung der Klassifizierungseinheit entartetes Gewebe zeigen, und allen Bildbereiche, die Gewebe zeigen, dienen. Ein Piktogramm wird vorliegend als ein Bild mit einer besonders geringen Auflösung verstanden. Die Auflösung kann beispielsweise so gewählt sein, dass das Bild einen Speicherplatzbedarf unterhalb einer vorbestimmten Schwelle besitzt.

Das System, d. h. das Unterstützungssystem, kann eine Kennzeichnungseinheit aufweisen, die eingerichtet ist, für Schnittbilder und/oder Klassifizierungsergebnisse der Klassifizierungseinheit für Schnittbilder einen Wert eines oder mehrerer vorbestimmter Kennzeichnungsparameter zu bestimmen, wobei die Anzeige eingerichtet ist, den jeweiligen Schnittbildern entsprechende Auswahlelemente in dem Auswahlbereich der Probendarstellung für den Nutzer sichtbar basierend auf dem jeweils bestimmten Wert des bzw. der Kennzeichnungsparameter zu kennzeichnen. Auf diese Weise kann der Nutzer überblicksartig über kennzeichnende Eigenschaften der Schnittbilder informiert werden, was die Effizienz, mit der Gewebeproben auf Gewebeentartungen hin geprüft werden können, weiter erhöhen kann. Die Kennzeichnungsparameter können sich auf das jeweilige Schnittbild oder auf die Gewebeprobe als Ganze beziehen. Die Werte der Kennzeichnungsparameter können auch als Kennwerte bezeichnet werden.

Die den Schnittbildern entsprechenden Auswahlelemente, die in dem Auswahlbereich der Anzeige angezeigt werden können, können also, beispielsweise zusätzlich zu den Schnittbildern entsprechenden Piktogrammen, Einblendungen von Kennwerten umfassen, die für die jeweiligen Schnittbilder ermittelt worden sind. Die in den Auswahlelementen eingeblendeten Kennwerte können beispielsweise a) einem Maß für die Gesamtgewebefläche, die in dem jeweiligen Schnittbild gezeigt ist, b) dem Relevanzparameter, also beispielsweise einem zahlenmäßigen oder flächenmäßigen Verhältnis zwischen den Bildbereichen des jeweiligen Schnittbildes, die gemäß der Klassifizierung der Klassifizierungseinheit entartetes Gewebe zeigen, und der Gesamtmenge an Bildbereichen des jeweiligen Schnittbildes, die Gewebe zeigen, c) einer Gesamtzahl der Schnittbilder, die für die gegebene Gewebeprobe, das heißt den vorliegenden Fall, bereitgestellt worden sind, d) einer Anzahl derjenigen Schnittbilder, die von der Klassifizierungseinheit analysiert worden sind, e) einer Anzahl von Schnittbildern, für die die Klassifizierungseinheit die Anwesenheit von Gewebeentartungen festgestellt hat, und/oder f) einer Anzahl von Schnittbildern, die vom Nutzer bereits ausgewertet wurden, entsprechen.

Zusätzlich oder alternativ zu den Kennwerten können in den Auswahlelementen auch Histogramme eingeblendet werden, d. h. graphische Darstellungen der Häufigkeitsverteilung von Klassifikationsergebnissen über die Bildbereiche des jeweiligen Schnittbildes, wobei die dargestellten Klassifizierungsergebnisse beispielsweise den Wahrscheinlichkeiten entsprechen können, mit denen die Bildbereiche gemäß der Klassifizierung der Klassifizierungseinheit entartetes Gewebe zeigen. Statt vollständiger Histogramme können auch ausgewählte Charakteristika der Histogramme in Form von weiteren Kennwerten eingeblendet werden.

Zudem können jene Auswahlelemente markiert dargestellt werden, die gemäß der Klassifizierung der Klassifizierungseinheit Schnittbildern entsprechen, die Gewebeentartungen zeigen. Die Markierung kann beispielsweise farblich sein.

Vorzugsweise ist die Anzeigeeinheit eingerichtet, das Schnittbild, das heißt das jeweils durch den Nutzer über ein zugehöriges Auswahlelement ausgewählte Schnittbild, in dem Analysebereich so anzuzeigen, dass zusammenhängende Gebiete von Bildbereichen, die gemäß der Klassifizierung der Klassifizierungseinheit entartetes Gewebe zeigen, über die Markierung der Bildbereiche an sich hinaus markiert sind, wenn eine Größe des jeweiligen zusammenhängenden Gebiets eine Mindestgröße unterschreitet. Auf diese Weise kann der Nutzer auch verhältnismäßig kleine Gebiete wahrscheinlich entarteten Gewebes schnell finden, was die Effizienz, mit der Gewebeproben auf Gewebeentartungen hin geprüft werden können, weiter erhöhen kann. Insbesondere kann auf diese Weise das Schnittbild in dem Analysebereich ohne oder nur mit einem verhältnismäßig geringen Vergrößerungsgrad angezeigt werden, sodass beispielsweise das gesamte im Schnittbild gezeigte Gewebe für den Nutzer sichtbar wird, ohne dass verhältnismäßig kleine Gebiete praktisch unsichtbar werden oder aufgrund einer begrenzten Auflösung der Anzeige gänzlich verschwinden. Es wird dem Nutzer also ermöglicht, einen Überblick über die räumliche Verteilung der Gebiete wahrscheinlich entarteten Gewebes über das gesamte Schnittbild zu erhalten.

Die Größe eines zusammenhängenden Gebiets von Bildbereichen, die gemäß der Klassifizierung der Klassifizierungseinheit entartetes Gewebe zeigen, kann sich auf eine Anzahl von Bildbereichen in dem jeweiligen zusammenhängenden Gebiet oder auf eine für den Nutzer sichtbare Größe in der Anzeige beziehen. Bezieht sich die Größe auf eine für den Nutzer sichtbare Größe in der Anzeige, kann sie von einem durch den Nutzer einstellbaren Vergrößerungsgrad des in dem Analysebereich angezeigten Schnittbildes abhängen. Die Mindestgröße kann durch den Nutzer einstellbar sein.

Die Anzeigeeinheit kann eingerichtet sein, bei Auswahl eines markierten zusammenhängenden Gebiets von gemäß der Klassifizierung der Klassifizierungseinheit entartetes Gewebe zeigenden Bildbereichen durch den Nutzer das Schnittbild in dem Analysebereich an dem ausgewählten Gebiet zentriert und mit einem vorbestimmten Vergrößerungsgrad anzuzeigen.

Während sich die Markierung der Bildbereiche, die gemäß der Klassifizierung der Klassifizierungseinheit entartetes Gewebe zeigen, beispielsweise auf eine farbliche Umrandung der Bildbereiche beziehen kann, kann sich die Markierung der zusammenhängenden Gebiete von Bildbereichen, die gemäß der Klassifizierung der Klassifizierungseinheit entartetes Gewebe zeigen, beispielsweise auf eine Markierung durch Fähnchen beziehen, die an einer Position angezeigt werden, die einer Position des jeweiligen Gebiets entspricht.

Vorteilhafterweise ist die Anzeigeeinheit eingerichtet, basierend auf einer entsprechenden Nutzereingabe die Anzeige zu veranlassen, von einer Probendarstellung, die den Analysebereich und den Auswahlbereich aufweist, in eine zu einem der Mehrzahl an Schnittbildern gehörige Schnittbilddarstellung zu wechseln, wobei auch die Schnittbilddarstellung einen Analysebereich und einen Auswahlbereich aufweist, wobei die Anzeigeeinheit eingerichtet ist, in dem Auswahlbereich der Schnittbilddarstellung Auswahlelemente anzuzeigen, die jeweils einem Gebiet des zu der Schnittbilddarstellung gehörigen Schnittbilds entsprechen, das gemäß der Klassifizierung der Klassifizierungseinheit entartetes Gewebe zeigt, und in dem Analysebereich der Schnittbilddarstellung dasjenige dieser Gebiete anzuzeigen, das einem durch den Nutzer ausgewählten Auswahlelement in dem Auswahlbereich der Schnittbilddarstellung entspricht. Auf diese Weise wird dem Nutzer ermöglicht, verschiedene entartungsträchtige Gebiete eines Schnittbildes effizient durchzusehen.

Der Auswahlbereich der Probendarstellung, der die den Schnittbildern entsprechenden Auswahlelemente umfasst, könnte auch als Schnittbildauswahlbereich verstanden werden, während der Auswahlbereich der Schnittbilddarstellung, der die gemäß der Klassifizierung der Klassifizierungseinheit entartetes Gewebe zeigenden Gebiete des jeweiligen Schnittbilds umfasst, auch als Gebietsauswahlbereich verstanden werden könnte. Der Analysebereich der Probendarstellung kann dem Analysebereich der Schnittbilddarstellung insoweit entsprechen, als in beiden Analysebereichen, die sich zudem auch über räumlich identische Bereiche der Anzeige erstrecken können, das jeweilige Schnittbild angezeigt wird. Allerdings kann es vorteilhaft sein, dass das Schnittbild in dem Analysebereich der Probendarstellung mit einem geringeren Vergrößerungsgrad dargestellt wird als in dem Analysebereich der Schnittbilddarstellung. Auf diese Weise wird es dem Nutzer ermöglicht, durch den Analysebereich der Probendarstellung einen Überblick über die räumliche Verteilung der als entartetes Gewebe zeigend klassifizierten Bildbereiche zu gewinnen, während dem Nutzer durch den Analysebereich der Schnittbilddarstellung eine detaillierte Analyse der lokalen Gewebestruktur in als entartetes Gewebe zeigend klassifizierten Bildbereichen des jeweiligen Schnittbilds ermöglicht wird.

Insbesondere kann die Schnittbilddarstellung einen ersten und einen zweiten Analysebereich aufweisen, wobei die Anzeigeeinheit eingerichtet sein kann, die Anzeige dazu zu veranlassen, einen ersten und einen zweiten Analysebereich in der Schnittbilddarstellung anzuzeigen, wobei der erste Analysebereich der Schnittbilddarstellung einen Ausschnitt des jeweiligen Schnittbildes mit einem ersten Vergrößerungsgrad anzeigt, der gemäß der Klassifizierung der Klassifizierungseinheit entartetes Gewebe zeigt, und wobei der zweite Analysebereich mit einem zweiten Vergrößerungsgrad einen Ausschnitt aus dem in dem ersten Analysebereich gezeigten Ausschnitt zeigt, vorzugsweise an dem Zentrum des als entartet klassifizierten Gewebes ausgerichtet. Auf diese Weise wird dem Nutzer ermöglicht, auch in der Schnittbilddarstellung noch einen Überblick über die als entartetes Gewebe zeigend klassifizierten Bildbereiche des Schnittbilds zu behalten, und gleichzeitig beliebig innerhalb dieser Bereiche zu zoomen und die Ansicht zu verschieben. Die Anzeigeeinheit kann eingerichtet sein, basierend auf einer entsprechenden Nutzereingabe die Anzeige zu veranlassen, in der Schnittbilddarstellung zwischen verschiedenen als entartetes Gewebe zeigend klassifizierten Bildbereichen des jeweiligen Schnittbilds zu wechseln.

Die Anzeigeeinheit kann eingerichtet sein, die Anzeige zu veranlassen, auch die Auswahlelemente in dem Auswahlbereich der Schnittbilddarstellung geordnet anzuzeigen. Beispielsweise können die Auswahlelemente des Auswahlbereichs der Schnittbilddarstellung gemäß einer Größe der ihnen jeweils entsprechenden Gewebegebiete geordnet angezeigt werden. Dies kann dem Nutzer weiterhelfen, wahrscheinlich entartete Gewebegebiete schnell zu finden.

Sowohl in dem Analysebereich der Probendarstellung als auch in dem Analysebereich der Schnittbilddarstellung können, wie oben beschrieben, Bildbereiche, die als entartetes Gewebe zeigend klassifiziert worden sind, markiert angezeigt werden. Dabei kann die Anzeigeeinheit eingerichtet sein, die Anzeige zu veranlassen, das jeweilige Schnittbild in dem jeweiligen Analysebereich an einem durch den Nutzer auswählbaren Bildbereich zu zentrieren. Beispielsweise kann der Nutzer durch einen Mausklick oder eine Berührung einer Anzeige in Form eines Touchscreens markierte Bildbereiche auswählen, woraufhin das Schnittbild in dem jeweiligen Analysebereich an dem ausgewählten Bildbereich zentriert wird.

Die Schnittbilddarstellung kann in einem weiteren Bildbereich Anzeigeelemente aufweisen, über die der Nutzer eine Feststellung darüber treffen kann, ob aus seiner Sicht das jeweils angezeigte Gebiet des Schnittbilds tatsächlich entartetes Gewebe enthält. Diese Anzeigeelemente können beispielsweise Schaltflächen sein, die je einer entsprechenden Einordnung durch den Nutzer entsprechen. Beispielsweise kann eine erste Schaltfläche zum Bestätigen der von der Klassifizierungseinheit ermittelten Klassifizierung und eine zweite Schaltfläche zum Widerrufen der von der Klassifizierungseinheit ermittelten Klassifizierung dienen. Die Betätigung der ersten oder der zweiten Schaltfläche kann dann effektiv einer Feststellung darüber entsprechen, ob das jeweils angezeigte Gebiet des Schnittbilds tatsächlich entartetes Gewebe enthält oder nicht. Als weiteres Anzeigeelement in der Schnittbilddarstellung kann etwa eine Schaltfläche vorgesehen sein, die es dem Nutzer erlaubt, ein jeweils angezeigtes Gebiet als "unklar" zu kennzeichnen, was bedeuten kann, dass der Nutzer sich das Gebiet zwar angesehen hat, aber noch zu keiner Feststellung darüber gelangt ist, ob das Gebiet entartetes Gewebe enthält oder nicht. Zudem kann eine Schaltfläche vorgesehen sein, die es dem Nutzer erlaubt, den Analyseprozess, der auch als Überprüfung der Klassifizierung durch die Klassifizierungseinheit verstanden werden kann, vorzeitig abzuschließen, d.h. beispielsweise bereits nach nur einer Bestätigung einer durch die Klassifizierungseinheit ermittelten Klassifizierung, wobei sich die Bestätigung auf ein beliebiges der von der Klassifizierungseinheit als entartetes Gewebe enthaltend klassifizierten Gebiete beziehen kann. Weitere Schaltflächen, die als Anzeigeelemente der Schnittbilddarstellung vorgesehen sein können, können dem Nutzer etwa zur Kennzeichnung von Artefakten oder solchen Gebieten dienen, die sich nicht innerhalb des zu analysierenden Gewebes befinden. Ist das zu analysierende Gewebe beispielsweise das Gewebe eines oder mehrerer Lymphknoten, kann der Nutzer über eine optionale zusätzliche Schaltfläche Gebiete kennzeichnen, die sich nicht innerhalb eines Lymphknotens befinden und stattdessen beispielsweise Bindegewebe entsprechen.

Wie weiter oben bereits erwähnt, können die Schnittbilder beispielsweise digitale Scans jeweils eines ganzen Objektträgers sein, aber auch Aufnahmen eines manuell steuerbaren Mikroskops, durch dessen Optik einerseits ein Nutzer lokale Gewebebereiche betrachten kann, das andererseits ein dem Nutzer erscheinendes Bild aber auch zur Digitalisierung bereitstellen kann. Insofern kann das System insbesondere dadurch gekennzeichnet sein, dass a) die Bildbereitstellungseinheit eingerichtet ist, Schnittbilder einer mittels eines manuell steuerbaren Mikroskops aufgenommenen Schnittbildsequenz bereitzustellen, während die Schnittbildsequenz aufgenommen wird, b) die Klassifizierungseinheit eingerichtet ist, mittels des trainierten neuronalen Netzes Bildbereiche der bereitgestellten Schnittbilder gemäß ihrer Wahrscheinlichkeit dafür zu klassifizieren, dass sie entartetes Gewebe zeigen, während die Schnittbildsequenz aufgenommen wird, und c) die Anzeigeeinheit eingerichtet ist, die bereitgestellten Schnittbilder zeitlich nacheinander in dem Analysebereich der Anzeige so anzuzeigen, dass Bildbereiche des jeweils angezeigten Schnittbildes, die gemäß der Klassifizierung der Klassifizierungseinheit entartetes Gewebe zeigen, in dem im Analysebereich angezeigten Schnittbild markiert sind. Das System kann dann insbesondere ferner eine Signalerzeugungseinheit aufweisen, die eingerichtet ist, ein akustisches und/oder haptisches, durch einen das Mikroskop steuernden Nutzer wahrnehmbares Signal zu erzeugen, wenn die Anzeigeeinheit einen Bildbereich markiert anzeigt, während die Schnittbildsequenz aufgenommen wird.

Die Klassifizierungseinheit kann also insbesondere verwendet werden, um Ausschnitte einer Bildsequenz oder in den Ausschnitten enthaltene Gewebegebiete zu klassifizieren, während die Bildsequenz durch den Nutzer mittels des Mikroskops aufgenommen wird, wobei der Nutzer bei Erkennung von wahrscheinlich entartetem Gewebe in einem jeweiligen Ausschnitt akustisch und/oder haptisch darauf hingewiesen wird. Die Bildsequenz kann einem Videomitschnitt dessen entsprechen, was auch für den Nutzer über die Optik des Mikroskops beobachtbar ist, während er durch verschiedene, auf einem jeweiligen Objektträger präparierte Gewebebereiche steuert. Dadurch, dass die Hinweise akustischer und/oder haptischer Natur sind, kann ein durch ein Okular des Mikroskops blickender Nutzer darauf aufmerksam gemacht werden, dass er gerade auf wahrscheinlich entartetes Gewebe blickt. Eine "Live-Analyse" wird so also nicht erst mit - typischerweise teureren - fernsteuerbaren und/oder automatisierten Digitalmikroskopsystemen ermöglicht, bei denen die Betrachtung der aufgenommenen Gewebebereiche auf deren digitale Anzeige beschränkt werden kann, sodass Markierungen in der Anzeige ausreichen, sondern bereits mit üblichen manuellen Mikroskopen, soweit sie eine Bilddigitalisierung durch einen integrierten Digitalbildensor oder einen Anschluss einer Digitalkamera erlauben.

Die Anzeigeeinheit und die Signalerzeugungseinheit können "parallel" mit der Klassifizierungseinheit verbunden sein. Das bedeutet, dass die Klassifizierungseinheit die Anzeigeeinheit und die Signalerzeugungseinheit in gleicher Weise über ein Klassifikationsergebnis informieren kann, woraufhin die Anzeigeeinheit eine visuelle Markierung zur Darstellung in der Anzeige und die Signalerzeugungseinheit ein akustisches und/oder haptischen Signal zur Ausgabe über eine entsprechende Ausgabeeinheit bestimmen kann.

Die akustischen und/oder haptischen Signale können in einer Frequenz, einem Rhythmus und/oder einer Intensität in Abhängigkeit eines jeweiligen Ergebnisses der Klassifizierung durch die Klassifizierungseinheit gewählt werden. Ein entsprechend trainierter Nutzer kann auf diese Weise bereits anhand des akustischen und/oder haptischen Signals die von der Klassifizierungseinheit bestimmte Klasse eines gerade betrachteten Gewebegebiets erkennen. Er muss also beispielsweise nicht erst seinen Blick vom Okular hin zu einer Anzeige wie beispielsweise einem in der Nähe des Mikroskops platzierten Monitor wenden, um darauf angezeigte sprachliche Hinweise auf eine entsprechende Gewebeklasse zu wahrzunehmen, was den Mikroskopierprozess stören würde.

In einer Ausführungsform der vorgenannten Art zur "Live-Analyse" von mittels eines manuell bedienten Mikroskops erzeugten Schnittbildern weist das System nicht zwingend eine Feststellungseinheit auf. Zudem können die oben beschriebenen Auswahlbereiche der Proben- bzw. Schnittbilddarstellung und auch die Proben- und die Schnittbilddarstellung selbst eine andere Form annehmen als für eine nachträgliche Analyse. Beispielsweise kann eine von dem Mikroskop an die Anzeige übertragene Schnittbildsequenz in einer Darstellung angezeigt werden, die einen Auswahlbereich in Form einer Zeitleiste aufweist, mittels derer ein Nutzer ein zu einem jeweiligen Zeitpunkt gehöriges Schnittbild der Schnittbildsequenz anzeigen lassen kann. Es ist ein weiterer Auswahlbereich der Darstellung denkbar, über den der Nutzer zu vorherigen Schnittbildsequenzen gelangen kann, die für vorherige Objektträger aufgenommen wurden. Wurden bereits Schnittbildsequenzen mehrerer Proben aufgenommen, könnten über den weiteren Auswahlbereich auch diese zur Anzeige gebracht werden. Eine Darstellung der Schnittbildsequenzen dieser Art kann als alternative Schnittbilddarstellung und/oder Probendarstellung verstanden werden.

Die "live" bereitgestellten Schnittbildsequenzen können auch als Schnittbildbereichsbildsequenzen oder Gewebegebietsbildsequenzen verstanden werden, da sie Sequenzen von Bildern entsprechen, die lediglich einen Teil eines Objektträgers bzw. des darauf präparierten Gewebes abdecken. Eine Darstellung der Schnittbildsequenzen der genannten Art, mit einem Auswahlbereich zur Auswahl einzelner Schnittbilder bzw. Schnittbildbereiche oder Gewebegebiete der Sequenz und einem Auswahlbereich zur Auswahl vorheriger Sequenzen, kann auch dann als alternative Schnittbilddarstellung und/oder Probendarstellung verstanden werden.

Für die Darstellung zur "Live-Analyse" kann die Anzeigeeinheit zudem eingerichtet sein, einen Protokollbereich anzuzeigen, der Ausschnitte einer derzeitigen und/oder einer vorherigen Schnittbildsequenz enthält, denen die Klassifikationseinheit und/oder der Nutzer über eine entsprechende Nutzereingabe eine einer vorbestimmten Mehrzahl an Klassen zugeordnet hat. Der Protokollbereich kann beispielsweise Piktogramme der entsprechenden Ausschnitte enthalten, d. h. einzelne Schnittbilder bzw. angesteuerte Gewebebereiche einer entsprechenden Sequenz.

Die jeweiligen Ausschnitte können in dem Protokollbereich zusammen mit zugehörigem Zeitstempel, einer Benennung der jeweiligen Klassifikation und/oder eine Kennnummer angezeigt werden. Kennnummern können für jede Schnittbildsequenz und geordnet nach medizinischem Fall bzw. Probe, Gewebeschnitt bzw. Objektträger und/oder Sitzung, d. h. einem zeitlichen Zusammenhang zwischen Schnittbildsequenzen, vergeben werden. Entsprechende Informationen können beispielsweise über auf den Objektträgern angebrachte Barcodes und automatisch erzeugte Zeitstempel gewonnen werden.

In dem Protokollbereich kann auch angegeben sein, ob in den bisher aufgenommenen Schnittbildsequenzen für eine Probe überhaupt bereits wahrscheinlich entartetes Gewebe erkannt worden ist. Auch qualitative Angaben darüber, welche Klassifikationsergebnisse bisher erzielt wurden, können in dem Protokollbereich angezeigt werden, insbesondere bei nicht-binären Klassifikationen. Über den Protokollbereich kann der Nutzer zudem die Möglichkeit haben, einzelne Aufnahmen zu markieren, mit Annotationen zu versehen, zu löschen und/oder zu speichern, bspw. in Form einer digitalen, mehrere Objektträger umfassende "Fallmappe", die dann später erneut angeschaut werden kann.

In Ausführungsformen zur "Live-Analyse" kann das System eingerichtet sein, über eine Schnittstelle mit einer Steuervorrichtung zu kommunizieren, über die ein mikroskopierender Nutzer einen Teil der Nutzereingaben vornehmen kann. Die Steuervorrichtung kann als ein eigenständiger Aspekt der vorliegenden Erfindung verstanden werden.

Die Steuervorrichtung kann beispielsweise an einem Mikroskop befestigbar und etwa die Form eines Joysticks annehmen. Sie kann Bedienelemente wie beispielsweise Knöpfe aufweisen, über die der Nutzer, während er mikroskopiert, eigenständig Aufnahmen machen kann. Parallel zu einer ohnehin an die Bildbereitstellungseinheit übertragenen Schnittbildsequenz kann der Nutzer also mittels der Bedienelemente selbst Aufnahmen der von ihm betrachteten Gewebebereiche machen.

Einzelne Aufnahmen kann der Nutzer beispielsweise selbst vornehmen, wenn er einen gerade betrachteten Gewebebereich selbst als möglicherweise entartet oder zumindest als fragwürdig oder einer weiteren Diagnose bedürftig ansieht. Die von dem Nutzer über die Steuervorrichtung selbst vorgenommenen Aufnahmen können separat von der Schnittbildsequenz abgespeichert werden, oder aber in Form von entsprechend gekennzeichneten einzelnen Schnittbildern der Schnittbildsequenz, die daraufhin etwa über den oben beschriebenen Protokollbereich der Anzeige zugänglich sein können und/oder in dem Auswahlbereich, also beispielsweise in einer Zeitleiste eines parallel zum Mikroskopiervorgang mitlaufenden Videomitschnitts, hervorgehoben dargestellt sein können.

Einzelne Aufnahmen kann der Nutzer auch vornehmen, wenn er einen gerade betrachteten Gewebebereich einem Training der Klassifizierungseinheit zugänglich machen möchte, wie es weiter unten näher beschrieben ist. Hierfür kann ein eigenes Bedienelement an der Steuervorrichtung vorgesehen sein, bei dessen Betätigung eine entsprechende Aufnahme so abgespeichert wird, dass sie zum Training der Klassifizierungseinheit abrufbar ist. Im Allgemeinen kann eine Zuordnung der Bedienelemente der Steuervorrichtung zu bestimmten Funktionen auch durch den Nutzer konfigurierbar sein.

Unabhängig davon, ob zur "Live-Analyse" oder zur nachträglichen Analyse eingesetzt, ist die Klassifizierungseinheit vorzugsweise eingerichtet, aus den Schnittbildern Gewebe zeigende Bildbereiche zu extrahieren und mittels des trainierten künstlichen neuronalen Netzes lediglich Bildbereiche innerhalb der extrahierten, Gewebe zeigenden Bildbereiche der Schnittbilder gemäß ihrer Wahrscheinlichkeit dafür zu klassifizieren, dass sie entartetes Gewebe zeigen. Da das künstliche neuronale Netz so nur Bildbereiche klassifizieren muss, die überhaupt für entartetes Gewebe in Frage kommen, kann die Effizienz bei der Prüfung von Gewebeproben auf eine Gewebeentartung hin so wesentlich erhöht werden. Insbesondere kann die Geschwindigkeit der Prüfung erhöht werden, ohne dass dies zu Lasten der Präzision der Prüfung gehen würde, da Bildbereiche, die kein Gewebe zeigen, auch kein entartetes Gewebe zeigen werden.

Die Klassifizierungseinheit kann eine Gewebeerkennungseinheit aufweisen, die eingerichtet ist zu erkennen, ob Bildbereiche Gewebe zeigen oder nicht, und nur die als Gewebe zeigend erkannten Bildbereiche für die Klassifikation danach zur Verfügung zu stellen, ob sie entartetes Gewebe zeigen.

Beispielsweise kann die Gewebeerkennungseinheit gezeigtes Gewebe in einem Bildbereich durch Vergleich eines oder mehrerer Bildwerte des Bildbereichs mit einem vorbestimmten Schwellwert erkennen. Die zum Vergleich herangezogenen Bildwerte können einzelne Pixelwerte oder daraus bestimmte Bildwerte wie beispielsweise Durchschnittswerte sein.

Die Klassifizierungseinheit kann auch eine Gewebeerkennungseinheit aufweisen, die eingerichtet ist, mittels eines eigens trainierten, weiteren künstlichen neuronalen Netzes Bildbereiche von Schnittbildern gemäß ihrer Wahrscheinlichkeit dafür zu klassifizieren, dass sie Gewebe zeigen, und nur die als Gewebe zeigend klassifizierten Bildbereiche für die Klassifikation danach zur Verfügung zu stellen, ob sie entartetes Gewebe zeigen. Mit anderen Worten kann die Gewebeerkennungseinheit eingerichtet sein, das in den Schnittbildern gezeigte Gewebe zu segmentieren, und nur das segmentierte Gewebe für die Klassifikation danach zur Verfügung zu stellen, ob es entartet ist oder nicht. Die Gewebeerkennungseinheit kann etwa eingerichtet sein, zunächst das in einem jeweiligen Schnittbild gezeigte Gewebe zu segmentieren, anschließend das Schnittbild in kachelförmige Bildbereiche aufzuteilen und dann nur jene Bildbereiche zur weiteren Verarbeitung zur Verfügung zu stellen, die sich mit dem segmentierten Gewebe überschneiden, das heißt solches enthalten. Die Unterteilung von Schnittbildern in kachelförmige Bildbereiche kann beispielsweise einem kartesischen Koordinatengitter entsprechen. Es versteht sich, dass das weitere künstliche neuronale Netz, das zur Erkennung von Gewebe, das heißt zu dessen Segmentierung, verwendet wird, eigens trainiert werden muss. Es kann vorteilhaft sein, dass auch zu diesem Training Schnittbilder verwendet werden müssen, die teilweise entartetes Gewebe zeigen.

Neben einem schwellwertbasierten Vorgehen und der Verwendung eines künstlichen neuronalen Netzes können die Gewebe zeigenden Bildbereiche durch die Gewebeerkennungseinheit auch durch andere Segmentierungstechniken herausgefiltert werden.

Auch das weitere künstliche neuronale Netz kann strukturell grundsätzlich einem bekannten künstlichen neuronalen Netz entsprechen. Beispielsweise kann es ähnlich oder identisch wie das zur Erkennung entarteten Gewebes verwendete künstliche neuronale Netz aufgebaut sein, aber anders, nämlich nicht zur Erkennung nur entarteten Gewebes, sondern zur Erkennung jeglichen Gewebes, trainiert worden sein.

Vorteilhafterweise sind die Schnittbilder histologische Bilder, wobei das künstliche neuronale Netz, das heißt das künstliche neuronale Netz, das die Klassifizierung von Bildbereichen gemäß ihrer Wahrscheinlichkeit dafür, dass sie entartetes Gewebe zeigen, vornimmt, trainiert wurde, Bildbereiche histologischer Bilder gemäß ihrer Wahrscheinlichkeit dafür zu klassifizieren, dass sie entartetes Gewebe zeigen. Beispielsweise können die Bilder Bilder von Schichten sein, die von der jeweiligen Gewebeprobe abgeschnitten wurden. Die Schichten können anschließend mittels Hämatoxylin-Eosin (HE) eingefärbt worden sein.

Durch die Verwendung histologischer Bilddaten können einige Gewebeentartungen sicherer erkannt werden als durch andere bildgebende Verfahren. Für die Befundung kolorektaler Karzinome ist eine histologische, d.h. insbesondere mikroskopische, Betrachtung einer Mindestanzahl an Lymphknoten praktisch unumgänglich. Statt oder auch zusätzlich zu einer HE-Färbung könnte auch beispielsweise eine Zytokeratin-Färbung eingesetzt werden. Die Beschränkung auf eine HE-Färbung kann aber Kosten- und Effizienzvorteile haben.

Das beschriebene System entfaltet seine Vorteile insbesondere in Fällen, in denen die Gewebeprobe einem Lymphknoten eines Patienten entnommen wurde und das zu erkennende entartete Gewebe Gewebe einer möglichen Metastase eines kolorektalen Karzinoms ist, wobei das künstliche neuronale Netz, das die Klassifizierung von Bildbereichen gemäß ihrer Wahrscheinlichkeit dafür, dass sie entartetes Gewebe zeigen, vornimmt, anhand von Schnittbildern von Lymphknotengewebeproben trainiert wurde, die teilweise von Metastasen eines kolorektalen Karzinoms befallen waren. Allerdings ist auch die Anwendung des Systems auf die Erkennung von anderen Metastasen in anderen anatomischen Regionen sowie auf die Erkennung anderer Tumore in vorteilhafter Weise möglich.

In einem weiteren Aspekt ist ein System zum Erzeugen von Trainingsdaten für ein künstliches neuronales Netz vorgesehen, wobei das System eine Trainingsdaten-Bereitstellungseinheit umfasst, die eingerichtet ist, erste Trainingsdaten bereitzustellen, die in Paaren aus ersten Trainingseingangsdaten und zugehörigen ersten Trainingsausgangsdaten strukturiert sind, wobei die ersten Trainingseingangsdaten ersten Bildbereichen von ersten Schnittbildern einer Vielzahl von Gewebeproben entsprechen, die teilweise Gewebeentartungen aufweisen, und die ersten Trainingsausgangsdaten bezüglich der ersten Bildbereiche getroffenen Feststellungen entsprechen, ob diese entartetes Gewebe zeigen. Zudem weist das System eine Netz-Bereitstellungseinheit auf, die eingerichtet ist, ein künstliches neuronales Netz bereitzustellen, das mit den ersten Trainingsdaten trainiert worden ist, entartetes Gewebe zeigende Bildbereiche zu bestimmen, sowie eine Trainingsdaten-Erzeugungseinheit, die eingerichtet ist, zweite Trainingsdaten zu erzeugen, die in Paaren aus zweiten Trainingseingangsdaten und zugehörigen zweiten Trainingsausgangsdaten strukturiert sind, wobei die zweiten Trainingseingangsdaten zweiten Bildbereichen der ersten und/oder zweiter Schnittbilder der Vielzahl von Gewebeproben entsprechen. Das System zum Erzeugen von Trainingsdaten für ein künstliches neuronales Netz wird im Folgenden auch als Trainingsdatenerzeugungssystem bezeichnet werden.

Die Trainingsdaten-Erzeugungseinheit ist eingerichtet, als zweite Bildbereiche solche Bildbereiche der ersten Schnittbilder auszuwählen, die mit solchen ersten Bildbereichen überlappen, die gemäß den ersten Trainingsausgangsdaten entartetes Gewebe zeigen, wobei die Trainingsdaten-Erzeugungseinheit zusätzlich oder alternativ eingerichtet sein kann, mittels des trainierten künstlichen neuronalen Netzes in den zweiten Schnittbildern Bildbereiche zu bestimmen, die entartetes Gewebe zeigen, und als zweite Bildbereiche solche Bildbereiche der zweiten Schnittbilder auszuwählen, die mit solchen Bildbereichen der zweiten Schnittbilder überlappen, für die mittels des trainierten künstlichen neuronalen Netzes bestimmt worden ist, dass sie entartetes Gewebe zeigen. Zudem ist die Trainingsdaten-Erzeugungseinheit eingerichtet, dem bereitgestellten künstlichen neuronalen Netz die zweiten Bildbereiche als Eingangsdaten zu übergeben und die zweiten Trainingsausgangsdaten basierend auf den daraufhin von dem bereitgestellten künstlichen neuronalen Netz ausgegebenen Ausgangsdaten und einer Nutzereingabe zu bestimmen, die indikativ für eine Bestätigung der von dem trainierten künstlichen neuronalen Netz für die zweiten Bildbereiche ausgegebenen Ausgangsdaten durch den Nutzer ist.

Das künstliche neuronale Netz wird also zunächst vorläufig anhand von ersten Trainingsdaten trainiert, wobei anschließend mittels des trainierten künstlichen neuronalen Netzes weitere Trainingsdaten erzeugt werden, die für ein weitergehendes Training des künstlichen neuronalen Netzes verwendet werden können. Auf diese Weise können leicht große Mengen von Trainingsdaten erzeugt werden, mit denen ein äußerst ausgiebiges Training des künstlichen neuronalen Netzes ermöglicht wird. Die Qualität, mit der das resultierende künstliche neuronale Netz Bildbereiche von Schnittbildern gemäß ihrer Wahrscheinlichkeit dafür klassifizieren kann, dass sie entartetes Gewebe zeigen, kann auf diese Weise verbessert werden. Eine qualitativ hochwertige Klassifizierung hat zur Folge, dass der Nutzer bei der bildbasierten Erkennung von Gewebeentartungen weniger Aufwand betreiben muss, um die Ergebnisse des künstlichen neuronalen Netzes zu verifizieren. Beispielsweise muss er weniger markierte Bildbereiche durchsehen, um einen Bildbereich zu finden, bei dem er sich sicher ist, entartetes Gewebe zu erkennen. Auch durch das System zum Erzeugen von Trainingsdaten wird also eine erhöhte Effizienz bei der bildbasierten Erkennung von Gewebeentartungen erreicht, sodass auch dieses System die eingangs genannte Aufgabe löst.

Wie weiter oben erläutert, ist gemäß einem Aspekt auch eine Steuervorrichtung wie bspw. ein Joystick mit Bedienelementen vorgesehen, die es einem Nutzer erlauben, während er auf einem Objektträger präpariertes Gewebe durch ein Okular eines Mikroskops betrachtet, dessen Bilder gleichzeitig digitalisiert werden, einzelne Bilder so gewonnener Bildsequenzen zum Training für die Klassifizierungseinheit abzuspeichern. Beispielsweise können mittels der Steuervorrichtung also erste Trainingsdaten der oben genannten Art erzeugt werden, wobei die ersten Trainingseingangsdaten den einzelnen, vom Nutzer aufgenommenen Bildern selbst entsprechen könnten. Sind die Bedienelemente der Steuervorrichtung entsprechend klassifikationsspezifisch konfiguriert, können auch die ersten Trainingsausgangsdaten bereits durch eine Betätigung der Steuervorrichtung erzeugt werden. Andererseits ist aber auch vorstellbar, dass während des Mikroskopierprozesses noch keine abschließenden Feststellungen über bestimmte Gewebeklassen getroffen werden sollen. Dann können die ersten Trainingsausgangsdaten auch erst im Rahmen eines nachträglichen "Labelings" der zuvor mittels der Steuervorrichtung zu diesem Zweck abgespeicherten Bilder sein.

Zusammen mit dem Mikroskop und einer Speichervorrichtung kann die Steuervorrichtung auch als System zum Erzeugen von Trainingsdaten für ein künstliches neuronales Netz angesehen werden. Das System würde dann im Allgemeinen ein Mikroskop mit einem Okular zum Betrachten verschiedener Gewebebereiche eines auf einem Objektträger präparierten Gewebeschnitts durch einen Nutzer und eine Kamera zum Aufnehmen von den betrachteten Gewebebereichen entsprechenden Schnittbildern umfassen, und ferner eine Speichervorrichtung zum Speichern der von der Kamera aufgenommenen Schnittbilder sowie eine Steuervorrichtung mit wenigstens einem Bedienelement, die eingerichtet ist, bei Betätigung des wenigstens einen Bedienelements durch den Nutzer die Speichervorrichtung zu veranlassen, ein von der Kamera aufgenommenes Schnittbild, das einem von dem Nutzer betrachteten Gewebebereich entspricht, in einem für Trainingsdaten vorgesehenen Teil der Speichervorrichtung zu speichern.

Dementsprechend kann die Trainingsdaten-Bereitstellungseinheit eingerichtet sein, die ersten Trainingsdaten wenigstens teilweise basierend auf Nutzereingaben eines Nutzers in Bezug auf eine oder mehrere Schnittbildsequenzen bereitzustellen, die von dem Nutzer mittels des Mikroskops aufgenommen wurden, wobei die Nutzereingaben jeweils indikativ für einen Ausschnitt der einen oder mehreren Schnittbildsequenzen sind und über die, vorzugsweise in Reichweite des Mikroskops angeordnete, Steuervorrichtung vorgenommen wurden.

Ein weiterer Aspekt betrifft ein System zum Trainieren eines künstlichen neuronalen Netzes, wobei das System eine Trainingsdaten-Bereitstellungseinheit umfasst, die eingerichtet ist, erste Trainingsdaten bereitzustellen, die in Paaren aus ersten Trainingseingangsdaten und zugehörigen ersten Trainingsausgangsdaten strukturiert sind, wobei die ersten Trainingseingangsdaten ersten Bildbereichen von ersten Schnittbildern einer Vielzahl von Gewebeproben entsprechen, die teilweise Gewebeentartungen aufweisen, und die ersten Trainingsausgangsdaten bezüglich der ersten Bildbereiche getroffenen Feststellungen entsprechen, ob diese entartetes Gewebe zeigen. Das System umfasst ferner eine Netz-Bereitstellungseinheit, die eingerichtet ist, das zu trainierende künstliche neuronale Netz bereitzustellen, eine Trainingseinheit, die eingerichtet ist, das zu trainierende künstliche neuronale Netz vorläufig so zu trainieren, dass das vorläufig trainierte künstliche neuronale Netz, wenn es die ersten Trainingseingangsdaten als Eingangsdaten erhält, Ausgangsdaten ausgibt, die den zu den erhaltenen ersten Trainingseingangsdaten gehörigen ersten Trainingsausgangsdaten entsprechen.

Zudem weist das System eine Trainingsdaten-Erzeugungseinheit auf, die eingerichtet ist, zweite Trainingsdaten zu erzeugen, die in Paaren aus zweiten Trainingseingangsdaten und zugehörigen zweiten Trainingsausgangsdaten strukturiert sind, wobei die zweiten Trainingseingangsdaten zweiten Bildbereichen der ersten und/oder zweiter Schnittbilder der Vielzahl von Gewebeproben entsprechen. Die Trainingsdaten-Erzeugungseinheit ist eingerichtet, als zweite Bildbereiche solche Bildbereiche der ersten Schnittbilder auszuwählen, die mit solchen ersten Bildbereichen überlappen, die gemäß den ersten Trainingsausgangsdaten entartetes Gewebe zeigen, und/oder mittels des vorläufig trainierten künstlichen neuronalen Netzes in den zweiten Schnittbildern Bildbereiche zu bestimmen, die entartetes Gewebe zeigen, und als zweite Bildbereiche solche Bildbereiche der zweiten Schnittbilder auszuwählen, die mit solchen Bildbereichen der zweiten Schnittbilder überlappen, für die mittels des vorläufig trainierten künstlichen neuronalen Netzes bestimmt worden ist, dass sie entartetes Gewebe zeigen. Die Trainingsdaten-Erzeugungseinheit ist ferner eingerichtet, dem vorläufig trainierten künstlichen neuronalen Netz die zweiten Bildbereiche als Eingangsdaten zu übergeben und die zweiten Trainingsausgangsdaten basierend auf den daraufhin von dem vorläufig trainierten künstlichen neuronalen Netz ausgegebenen Ausgangsdaten und einer Nutzereingabe zu bestimmen, die indikativ für eine Bestätigung der von dem vorläufig trainierten künstlichen neuronalen Netz für die zweiten Bildbereiche ausgegebenen Ausgangsdaten durch den Nutzer ist, wobei die Trainingseinheit eingerichtet ist, das vorläufig trainierte künstliche neuronale Netz ergänzend so zu trainieren, dass das ergänzend trainierte künstliche neuronale Netz, wenn es die ersten und/o-derzweiten Trainingseingangsdaten als Eingangsdaten erhält, Ausgangsdaten ausgibt, die den zu den erhaltenen ersten und/oder zweiten Trainingseingangsdaten gehörigen ersten und/oder zweiten Trainingsausgangsdaten entsprechen. Die Trainingsdaten-Erzeugungseinheiten des Systems zum Erzeugen von Trainingsdaten für ein künstliches neuronales Netz und des Systems zum Trainieren eines künstlichen neuronalen Netzes entsprechen sich also. Das System zum Trainieren eines künstlichen neuronalen Netzes wird im Folgenden auch als Trainingssystem bezeichnet werden.

Bevorzugt ist die Trainingsdaten-Bereitstellungseinheit ferner eingerichtet, erste Validierungsdaten bereitzustellen, die in Paaren aus ersten Validierungseingangsdaten und zugehörigen ersten Validierungsausgangsdaten strukturiert sind, wobei a) die ersten Validierungsdaten einem Teil der Trainingsdaten entsprechen, der nicht von der Trainingseinheit zum Training verwendet werden, oder wobei b) die ersten Validierungseingangsdaten dritten Bildbereichen von Schnittbildern einer Vielzahl von Gewebeproben entsprechen, die teilweise Gewebeentartungen aufweisen, und die ersten Validierungsausgangsdaten bezüglich der dritten Bildbereiche getroffenen Feststellungen entsprechen, ob diese entartetes Gewebe zeigen. Die Trainingseinheit ist bevorzugt eingerichtet, das vorläufige Training durchzuführen, bis das künstliche neuronale Netz, wenn es die ersten Validierungseingangsdaten als Eingangsdaten erhält, Ausgangsdaten ausgibt, die in Bezug auf die ersten Validierungsausgangsdaten eine vorbestimmte Genauigkeit aufweisen.

Die Genauigkeit kann beispielsweise anhand einer Validation-Loss-Funktion bestimmt werden, wobei das vorläufige Training beendet werden kann, sobald die Validation-Loss-Funktion gesättigt ist. Vorteilhafterweise wird die Genauigkeit anhand eines Genauigkeitsmaßes gemessen, das über alle Validierungseingangsdaten definiert ist, wobei das Genauigkeitsmaß jenen Validierungsdatenpaaren ein höheres Gewicht zumisst, für die die getroffenen Feststellungen anzeigen, dass der jeweilige Bildbereich entartetes Gewebe zeigt, als jenen Validierungsdatenpaaren, für die die getroffenen Feststellungen anzeigen, dass der jeweilige Bildbereich kein entartetes Gewebe zeigt.

Das ergänzende Training des vorläufig trainierten künstlichen neuronalen Netzes kann ebenfalls anhand von Validierungsdaten gesteuert werden. Dies können die bereits für das vorläufige Training verwendeten ersten Validierungsdaten oder weitere Validierungsdaten sein. Die Validierungsdaten, die für das ergänzende Training verwendet werden, können als zweite Validierungsdaten bezeichnet werden. Die Trainingseinheit kann also zudem eingerichtet sein, das ergänzende Training des vorläufig trainierten künstlichen neuronalen Netzes durchzuführen, bis das künstliche neuronale Netz, wenn es die zweiten Validierungseingangsdaten als Eingangsdaten erhält, Ausgangsdaten ausgibt, die in Bezug auf die zweiten Validierungsausgangsdaten eine vorbestimmte Genauigkeit aufweisen. Die für das ergänzende Training vorbestimmte Genauigkeit in Bezug auf die zweiten Validierungsdaten kann der für das vorläufige Training vorbestimmten Genauigkeit in Bezug auf die ersten Validierungsdaten entsprechen und/oder auf gleiche Weise bestimmt bzw. gemessen werden.

Vorzugsweise erfolgt das ergänzende Training iterativ. Das heißt, dass das ergänzende Training zunächst mit einer begrenzten Menge zweiter Trainingsdaten durchgeführt werden kann und anschließend mit der Maßgabe wiederholt werden kann, dass das zuvor ergänzend trainierte künstliche neuronale Netz als vorläufig trainiertes künstliches neuronales Netz angesehen wird. Bei der Wiederholung des ergänzenden Trainings werden also mittels des zuvor ergänzend trainierten künstlichen neuronalen Netzes aus den ersten und/oder zweiten Trainingsdaten weitere Trainingsdaten erzeugt, die bei dem wiederholten ergänzenden Training als zweite Trainingsdaten angesehen werden. Diese Iteration, d. h. das wiederholt ergänzende Training, kann durchgeführt werden, bis das wiederholt ergänzend trainierte künstliche neuronale Netz, wenn es die zweiten Validierungseingangsdaten als Eingangsdaten erhält, Ausgangsdaten ausgibt, die in Bezug auf die zweiten Validierungsausgangsdaten eine vorbestimmte, insbesondere ausreichende, Genauigkeit aufweisen.

Ein weiterer Aspekt betrifft ein Verfahren zur Unterstützung eines Nutzers bei der bildbasierten Erkennung einer Gewebeentartung, wobei gemäß dem Verfahren eines einer Mehrzahl an Schnittbildern einer Gewebeprobe bereitgestellt wird und mittels eines trainierten künstlichen neuronalen Netzes Bildbereiche des Schnittbildes gemäß ihrer Wahrscheinlichkeit dafür klassifiziert werden, dass sie entartetes Gewebe zeigen. Das Schnittbild wird in einem Analysebereich einer Anzeige so angezeigt, dass Bildbereiche des Schnittbildes, die gemäß der Klassifizierung entartetes Gewebe zeigen, in dem im Analysebereich angezeigten Schnittbild markiert sind. Gemäß dem Verfahren wird eine Gewebeentartung in der Gewebeprobe basierend auf einer Nutzereingabe festgestellt, die indikativ für eine Bestätigung des Nutzers dessen ist, dass einer der markierten Bildbereiche entartetes Gewebe zeigt. Das Verfahren zur Unterstützung eines Nutzers bei der bildbasierten Erkennung einer Gewebeentartung wird im Folgenden auch als Unterstützungsverfahren bezeichnet werden.

Zudem bezieht sich ein Aspekt auf ein Verfahren zum Erzeugen von Trainingsdaten für ein künstliches neuronales Netz. Gemäß diesem Verfahren werden erste Trainingsdaten bereitgestellt, die in Paaren aus ersten Trainingseingangsdaten und zugehörigen ersten Trainingsausgangsdaten strukturiert sind, wobei die ersten Trainingseingangsdaten ersten Bildbereichen von ersten Schnittbildern einer Vielzahl von Gewebeproben entsprechen, die teilweise Gewebeentartungen aufweisen, und die ersten Trainingsausgangsdaten bezüglich der ersten Bildbereiche getroffenen Feststellungen entsprechen, ob diese entartetes Gewebe zeigen. Weiterhin wird ein künstliches neuronales Netz bereitgestellt, das mit den ersten Trainingsdaten trainiert worden ist, entartetes Gewebe zeigende Bildbereiche zu bestimmen, und es werden zweite Trainingsdaten erzeugt, die in Paaren aus zweiten Trainingseingangsdaten und zugehörigen zweiten Trainingsausgangsdaten strukturiert sind, wobei die zweiten Trainingseingangsdaten zweiten Bildbereichen der ersten und/oder zweiter Schnittbilder der Vielzahl von Gewebeproben entsprechen. Als zweite Bildbereiche der ersten Schnittbilder werden solche Bildbereiche ausgewählt, die mit solchen ersten Bildbereichen überlappen, die gemäß den ersten Trainingsausgangsdaten entartetes Gewebe zeigen. Zusätzlich oder alternativ werden mittels des trainierten künstlichen neuronalen Netzes in den zweiten Schnittbildern Bildbereiche bestimmt, die entartetes Gewebe zeigen, und als zweite Bildbereiche solche Bildbereiche der zweiten Schnittbilder ausgewählt, die mit solchen Bildbereichen der zweiten Schnittbilder überlappen, für die mittels des trainierten künstlichen neuronalen Netzes bestimmt worden ist, dass sie entartetes Gewebe zeigen. Dabei werden dem bereitgestellten künstlichen neuronalen Netz die zweiten Bildbereiche als Eingangsdaten übergeben und die zweiten Trainingsausgangsdaten basierend auf den daraufhin von dem bereitgestellten künstlichen neuronalen Netz ausgegebenen Ausgangsdaten und einer Nutzereingabe bestimmt, die indikativ für eine Bestätigung der von dem vorläufig trainierten künstlichen neuronalen Netz für die zweiten Bildbereiche ausgegebenen Ausgangsdaten durch den Nutzer ist. Das Verfahren zum Erzeugen von Trainingsdaten für ein künstliches neuronales Netz wird im Folgenden auch als Trainingsdatenerzeugungsverfahren bezeichnet werden.

Gemäß einem weiteren Aspekt ist ein Verfahren zum Trainieren eines künstlichen neuronalen Netzes vorgesehen, bei dem (i) erste Trainingsdaten bereitgestellt werden, die in Paaren aus ersten Trainingseingangsdaten und zugehörigen ersten Trainingsausgangsdaten strukturiert sind, wobei die ersten Trainingseingangsdaten ersten Bildbereichen von ersten Schnittbildern einer Vielzahl von Gewebeproben entsprechen, die teilweise Gewebeentartungen aufweisen, und die ersten Trainingsausgangsdaten bezüglich der ersten Bildbereiche getroffenen Feststellungen entsprechen, ob diese entartetes Gewebe zeigen, wobei (ii) zudem das zu trainierende künstliche neuronale Netz bereitgestellt wird und dieses (iii) so vorläufig trainiert wird, dass das vorläufig trainierte künstliche neuronale Netz, wenn es die ersten Trainingseingangsdaten als Eingangsdaten erhält, Ausgangsdaten ausgibt, die den zu den erhaltenen ersten Trainingseingangsdaten gehörigen ersten Trainingsausgangsdaten entsprechen. In einem weiteren Schritt (iv) werden zweite Trainingsdaten erzeugt, die in Paaren aus zweiten Trainingseingangsdaten und zugehörigen zweiten Trainingsausgangsdaten strukturiert sind, wobei die zweiten Trainingseingangsdaten zweiten Bildbereichen der ersten oder zweiten Schnittbilder der Vielzahl von Gewebeproben entsprechen. Dabei werden wiederum als zweite Bildbereiche der ersten Schnittbilder solche Bildbereiche ausgewählt, die mit solchen ersten Bildbereichen überlappen, die gemäß den ersten Trainingsausgangsdaten entartetes Gewebe zeigen, wobei zusätzlich oder alternativ mittels des vorläufig trainierten künstlichen neuronalen Netzes in den zweiten Schnittbildern Bildbereiche bestimmt werden, die entartetes Gewebe zeigen, und als zweite Bildbereiche solche Bildbereiche der zweiten Schnittbilder ausgewählt werden, die mit solchen Bildbereichen der zweiten Schnittbilder überlappen, für die mittels des vorläufig trainierten künstlichen neuronalen Netzes bestimmt worden ist, dass sie entartetes Gewebe zeigen. Dem vorläufig trainierten künstlichen neuronalen Netz werden, weiterhin in Schritt (iv), die zweiten Bildbereiche als Eingangsdaten übergeben, und die zweiten Trainingsausgangsdaten werden basierend auf den daraufhin von dem vorläufig trainierten künstlichen neuronalen Netz ausgegebenen Ausgangsdaten und einer Nutzereingabe bestimmt, die indikativ für eine Bestätigung der von dem vorläufig trainierten künstlichen neuronalen Netz für die zweiten Bildbereiche ausgegebenen Ausgangsdaten durch den Nutzer ist. Das vorläufig trainierte künstliche neuronale Netz wird in einem weiteren Schritt (v) so trainiert, dass das ergänzend trainierte künstliche neuronale Netz, wenn es die ersten und/oder zweiten Trainingseingangsdaten als Eingangsdaten erhält, Ausgangsdaten ausgibt, die den zu den erhaltenen ersten und/oder zweiten Trainingseingangsdaten gehörigen ersten und/oder zweiten Trainingsausgangsdaten entsprechen. Das Verfahren zum Trainieren eines künstlichen neuronalen Netzes wird im Folgenden auch als Trainingsverfahren bezeichnet werden.

Wie bereits weiter oben erwähnt, kann das ergänzende Training iterativ erfolgen. Das heißt für das Verfahren zum Trainieren des künstlichen neuronalen Netzes, dass die Schritte (ii) bis (v) wiederholt werden können, wobei in Schritt (ii) das zuvor in Schritt (v) ergänzend trainierte künstliche neuronale Netz als zu trainierendes künstliches neuronales Netz bereitgestellt wird und in Schritt (iv) aus den ersten und/oder zweiten Trainingsdaten des vorherigen Durchlaufs der Schritte (ii) bis (v) weitere Trainingsdaten erzeugt werden, die zeitweise als neue "zweite" Trainingsdaten betrachtet werden. Diese Iteration, d. h. das wiederholt ergänzende Training, kann durchgeführt werden, bis das wiederholt ergänzend trainierte künstliche neuronale Netz, wenn es für diesen Zweck vorgegebene Validierungseingangsdaten als Eingangsdaten erhält, Ausgangsdaten ausgibt, die in Bezug auf die Validierungsausgangsdaten eine vorbestimmte, insbesondere ausreichende, Genauigkeit aufweisen.

In einem weiteren Aspekt ist ein Computerprogramm zur Unterstützung eines Nutzers bei der bildbasierten Erkennung einer Gewebeentartung vorgesehen, wobei das Computerprogramm Befehle umfasst, die, wenn das Computerprogramm auf dem Unterstützungssystem ausgeführt wird, das System dazu veranlassen, das Unterstützungsverfahren auszuführen.

Zudem ist in einem Aspekt ein Computerprogramm zum Erzeugen von Trainingsdaten für ein künstliches neuronales Netz vorgesehen, wobei das Computerprogramm Befehle umfasst, die, wenn das Computerprogramm auf dem Trainingsdatenerzeugungssystem ausgeführt wird, das System dazu veranlassen, das Trainingsdatenerzeugungsverfahren auszuführen.

Schließlich betrifft ein Aspekt ein Computerprogramm zum Trainieren eines künstlichen neuronalen Netzes, wobei das Computerprogramm Befehle umfasst, die, wenn das Computerprogramm auf dem Trainingssystem ausgeführt wird, das System dazu veranlassen, das Trainingsverfahren auszuführen.

Es versteht sich, dass die Systeme, die Steuervorrichtung, die Verfahren und die Computerprogramme gemäß den oben beschriebenen Aspekten, insbesondere die Systeme nach den Ansprüchen 1, 10, 12 und 13, das Verfahren nach Anspruch 14 sowie das Computerprogramm nach Anspruch 15 ähnliche oder identische bevorzugte Ausführungsformen aufweisen, insbesondere wie sie in den abhängigen Ansprüchen definiert sind. Es versteht sich zudem, dass eine bevorzugte Ausführungsform der vorliegenden Erfindung auch jede Kombination aus einem oder mehreren der abhängigen Ansprüche und/oder einer oder mehreren der vorstehend oder nachstehend beschriebenen Ausführungsformen mit dem jeweiligen unabhängigen Anspruch sein kann.

Im Folgenden werden Ausführungsformen der Erfindung unter Bezugnahme auf nachstehend genannte Figuren beschrieben, um die oben beschriebenen sowie weitere Aspekte zu veranschaulichen.
- Fig. 1: ist eine beispielhafte und schematische Darstellung des Systems zur Unterstützung eines Nutzers bei der bildbasierten Erkennung einer Gewebeentartung,
- Fig. 2: zeigt beispielhaft ein Schnittbild einer eine Gewebeentartung aufweisenden Gewebeprobe in drei unterschiedlichen Vergrößerungsgraden,
- Fig. 3: zeigt beispielhaft und schematisch eine Freigabedarstellung einer Anzeige,
- Fig. 4: zeigt beispielhaft und schematisch eine Probendarstellung einer Anzeige,
- Fig. 5A: zeigt beispielhaft und schematisch eine Schnittbilddarstellung einer Anzeige,
- Fig. 5B: zeigt beispielhaft und schematisch eine Variante der in Fig. 5A gezeigten Schnittbilddarstellung,
- Fig. 6: ist eine beispielhafte und schematische Darstellung eines Systems zum Erzeugen von Trainingsdaten für ein neuronales Netz,
- Fig. 7: stellt beispielhaft und schematisch die Erzeugung von Trainingsdaten für ein neuronales Netz gemäß einer Ausführungsform dar,
- Fig. 8: ist eine beispielhafte und schematische Darstellung eines Systems zum Trainieren eines neuronalen Netzes,
- Fig. 9: ist eine beispielhafte und schematische Darstellung des Verfahrens zur Unterstützung eines Nutzers bei der bildbasierten Erkennung einer Gewebeentartung,
- Fig. 10: ist eine beispielhafte und schematische Darstellung des Verfahrens zum Erzeugen von Trainingsdaten für ein neuronales Netz,
- Fig. 11: ist eine beispielhafte und schematische Darstellung des Verfahrens zum Trainieren eines neuronalen Netzes,
- Fig. 12: stellt beispielhaft und schematisch den Ablauf bei der bildbasierten Erkennung einer Gewebeentartung gemäß einer Ausführungsform dar, und
- Fig. 13: ist eine beispielhafte und schematische Darstellung einer Ausführungsform zur "Live-Analyse" von Gewebebereichen und Erzeugung von Trainingsdaten während eines laufenden Mikroskopiervorgangs.

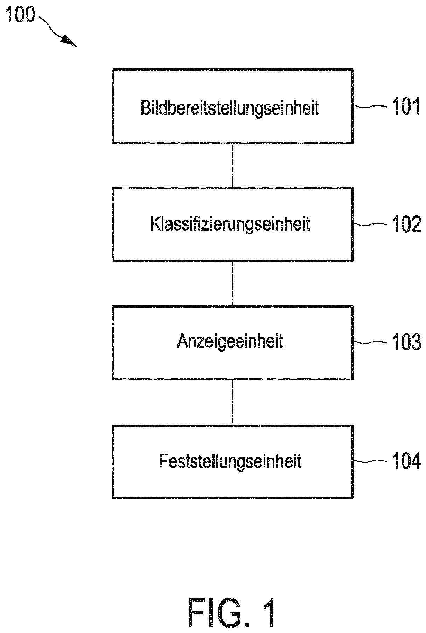

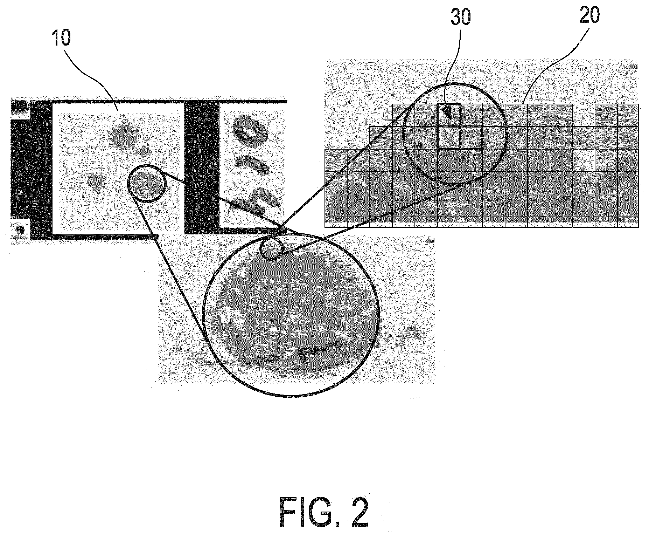

Fig. 1 zeigt beispielhaft und exemplarisch ein System 100 zur Unterstützung eines Nutzers bei der bildbasierten Erkennung einer Gewebeentartung. Die zu erkennenden Gewebeentartungen entsprechen in diesem Fall Lymphknotenmetastasen eines kolorektalen Karzinoms. Das System 100 umfasst eine Bildbereitstellungseinheit 101, die eingerichtet ist, eines einer Mehrzahl an Schnittbildern 10, 10' einer Gewebeprobe bereitzustellen. In Fig. 2 ist beispielhaft ein Schnittbild 10 dargestellt, das durch ein histologisches Verfahren gewonnen wurde. Die Bildbereitstellungseinheit 101 kann beispielsweise alle Schnittbilder 10, 10', die für eine gegebene Gewebeprobe erstellt worden sind, nacheinander bereitstellen.

Das System 100 weist zudem eine Klassifizierungseinheit 102 auf, die eingerichtet ist, mittels eines trainierten neuronalen Netzes Bildbereiche 20 des jeweiligen Schnittbildes 10, 10', das von der Bildbereitstellungseinheit 101 bereitgestellt worden ist, gemäß ihrer Wahrscheinlichkeit dafür zu klassifizieren, dass sie entartetes Gewebe 30 zeigen. Wie in Fig. 2 beispielhaft zu erkennen ist, kann die Klassifizierungseinheit 102 eingerichtet sein, das Schnittbild 10 in quadratische Bildbereiche aufzuteilen und die Klassifizierung für jeden der quadratischen Bildbereiche durchzuführen. Die Anzahl der Bildbereiche je Schnittbild kann etwa 20.000 betragen. Fig. 2 zeigt das Schnittbild 10 in voller Größe, einen ersten, Gewebe zeigenden Ausschnitt des Schnittbilds 10 mit einem ersten Vergrößerungsgrad und einen zweiten, entartetes Gewebe zeigenden Ausschnitt des ersten Ausschnitts mit einem zweiten Vergrößerungsgrad, der größer als der erste Vergrößerungsgrad ist. Die Vergrößerung zwischen dem Schnittbild 10 in voller Größe und dem ersten Ausschnitt sowie zwischen dem ersten Ausschnitt und dem zweiten Ausschnitt ist jeweils grafisch illustriert.

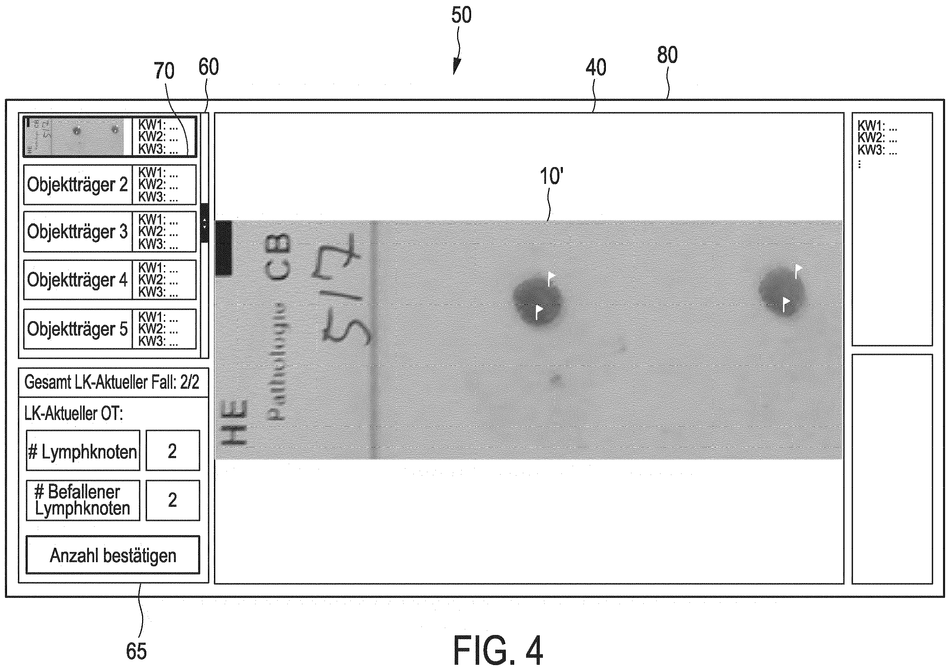

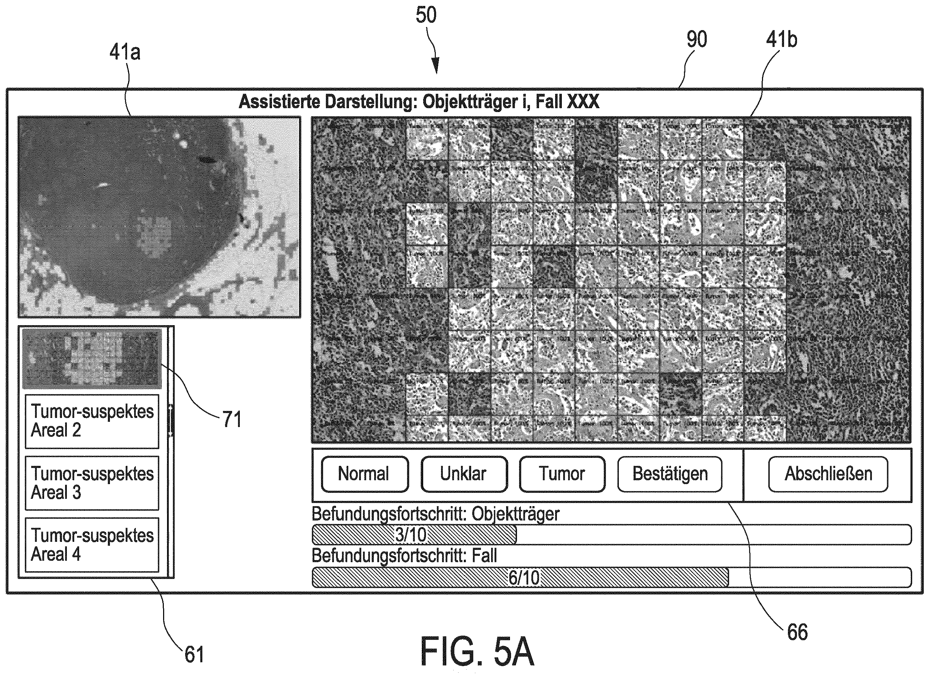

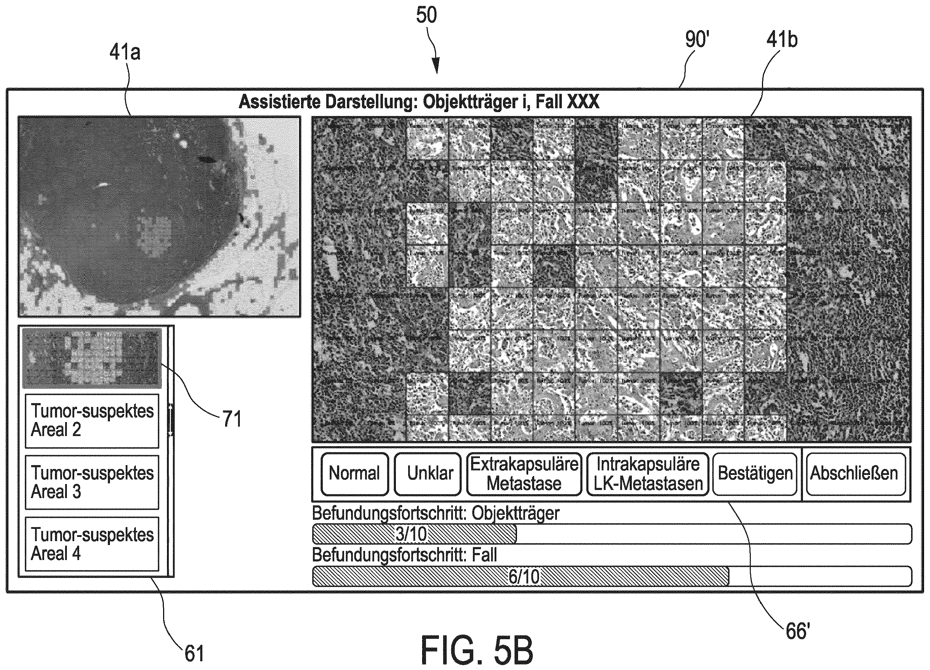

Das System 100 weist ferner eine Anzeigeeinheit 103 auf, die eingerichtet ist, das jeweilige Schnittbild 10, 10' in einem Analysebereich 40 einer Anzeige 50 so anzuzeigen, dass Bildbereiche 20 des Schnittbildes 10, 10', die gemäß der Klassifizierung der Klassifizierungseinheit 102 entartetes Gewebe 30 zeigen, in dem im Analysebereich 40 angezeigten Schnittbild 10, 10' markiert sind. Zwei unterschiedliche Arten von Markierungen werden noch näher mit Bezug auf Fig. 4 und Fig. 5A sowie 5B beschrieben werden.

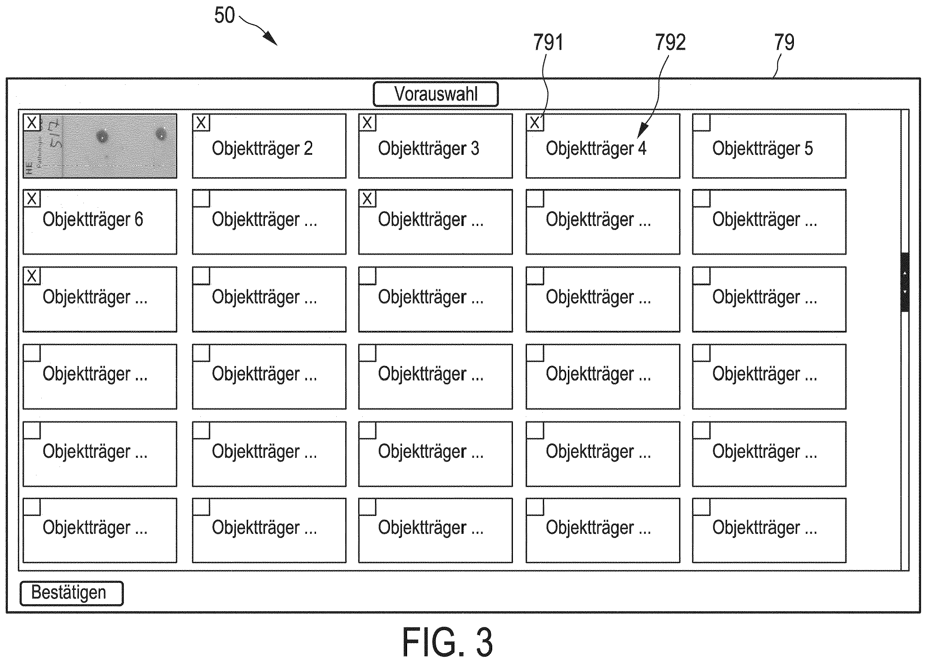

Wie durch Fig. 3 veranschaulicht, kann die Anzeigeeinheit 103 optional die Anzeige 50 dazu veranlassen, in einer Freigabedarstellung 79 alle zu einer Gewebeprobe gehörigen Schnittbilder gemeinsam in Form von Piktogrammen darzustellen, und zwar insbesondere noch bevor die Schnittbilder der Klassifizierungseinheit 102 übergeben werden. Über entsprechende Schaltflächen wie beispielsweise die in Fig. 3 gezeigten Checkboxes 791 kann der Nutzer mithilfe der Freigabedarstellung eine Vorauswahl darüber treffen, welche Schnittbilder für die weiteren Bearbeitungsschritte freigegeben werden sollen. Beispielsweise können so offensichtlich artefaktbehaftete Schnittbilder leicht aussortiert werden. In Fig. 3 ist lediglich ein Piktogramm zu dem Schnittbild 10` tatsächlich gezeigt, während die weiteren Anzeigeorte 792 für die weiteren Schnittbilder lediglich schematisch gezeigt sind. In dem dargestellten Fall entsprechen die Schnittbilder Whole-Slide-Scans, sodass die Anzeigeorte nach Objektträgern nummeriert sind.

Des Weiteren weist das System 100 eine Feststellungseinheit 104 auf, die eingerichtet ist, eine Gewebeentartung in der Gewebeprobe basierend auf einer Nutzereingabe festzustellen, die indikativ für eine Bestätigung des Nutzers dessen ist, dass einer der markierten Bildbereiche 20 entartetes Gewebe 30 zeigt.

Aus Fig. 4 wird deutlich, dass die Bildbereitstellungseinheit 101 eingerichtet sein kann, die Mehrzahl an Schnittbildern 10 der Gewebeprobe bereitzustellen, wobei die Klassifizierungseinheit 102 eingerichtet sein kann, mittels des trainierten neuronalen Netzes in jedem der Schnittbilder 10, 10` der Gewebeprobe Bildbereiche 20 gemäß ihrer Wahrscheinlichkeit dafür zu klassifizieren, dass sie entartetes Gewebe zeigen. In der in Fig. 4 dargestellten Anzeige 50 werden in einem Auswahlbereich 60 Auswahlelemente 70 angezeigt, die jeweils einem der Mehrzahl an Schnittbildern 10, 10' entsprechen. In dem dargestellten Fall hat der Nutzer das oberste der gezeigten Auswahlelemente 70 ausgewählt, sodass ein diesem Auswahlelement entsprechendes Schnittbild 10' in dem Analysebereich 40 der Anzeige angezeigt wird. Im dargestellten Fall kann der Nutzer durch Betätigung eines am rechten Rand des Auswahlbereichs befindlichen Scroll-Balkens durch die den verschiedenen Schnittbildern entsprechenden Auswahlelemente scrollen. Die Auswahlelemente weisen jeweils ein Piktogramm der zugehörigen Schnittbilder auf, wobei dies in Fig. 4 nur für das ausgewählte Auswahlelement dargestellt ist. Zudem weisen die Auswahlelemente 70 einen Bereich auf, in dem ausgewählte Kennwerte eingeblendet sind, die Eigenschaften der jeweiligen Schnittbilder charakterisieren. Auch können die Auswahlelemente, wie dargestellt, mit einer beispielsweise farbigen Umrandung dargestellt werden, die indikativ dafür ist, ob in dem zugehörigen Schnittbild gemäß der Klassifizierung der Klassifizierungseinheit 102 entartetes Gewebe gezeigt ist.

In Fig. 4 entspricht der in dem Analysebereich 40 dargestellte Bereich des durch den Nutzer ausgewählten Schnittbilds 10' dem Bereich, der als Piktogramm in dem zugehörigen Auswahlelement 70 eingeblendet ist. Allerdings kann der Nutzer beliebig über den in dem im Analysebereich 40 der Probendarstellung 80 dargestellten Bereich des Schnittbilds 10` bestimmen, beispielsweise durch Verschieben oder Vergrößern des Bereichs.

Die Auswahlelemente 70 werden in dem Auswahlbereich 60 geordnet angezeigt, wobei sich die Ordnung, die auch als Reihenfolge bezeichnet werden könnte, nach einer den jeweils zugehörigen Schnittbildern 10, 10' zugeordneten Relevanz richtet. Die Relevanz wird anhand eines Relevanzparameters gemessen, der indikativ für einen Anteil derjenigen Bildbereiche 20 an dem jeweils zugehörigen Schnittbild 10, 10` ist, die gemäß der Klassifizierung der Klassifizierungseinheit 102 entartetes Gewebe zeigen. In Fig. 4 bedeutet dies also beispielsweise, dass das Schnittbild 10', das dem obersten der angezeigten Auswahlelemente 70 entspricht, einen größeren Anteil an gemäß der Klassifizierung der Klassifizierungseinheit 102 entartetes Gewebe zeigenden Bildbereichen aufweist als die Schnittbilder, die den weiter unten angeordneten Auswahlelementen 70 entsprechen. Die relevanzbasierte Anordnung der Auswahlelemente 70 in der Probendarstellung 80 erlaubt es dem Nutzer, auf leichte Weise jene Schnittbilder 10, 10` einer gegebenen Gewebeprobe zu finden, in denen besonders viele entartungsträchtige Gebiete zu sehen sind, was zu einer schnelleren Einschätzung darüber führen kann, ob die Gewebeprobe tatsächlich entartetes Gewebe aufweist oder nicht.

Das jeweils ausgewählte Schnittbild 10, 10' kann in dem Analysebereich 40 der Probendarstellung 80 so angezeigt werden, dass zusammenhängende Gebiete von Bildbereichen 20, die gemäß der Klassifizierung der Klassifizierungseinheit 102 entartetes Gewebe zeigen, über die Markierung der Bildbereiche 20 an sich hinaus markiert sind, wenn eine Größe des jeweiligen zusammenhängenden Gebiets eine Mindestgröße unterschreitet. Aus Fig. 4, in der in dem Schnittbild 10' zusammenhängende Gebiete von Bildbereichen 20, die gemäß der Klassifizierung der Klassifizierungseinheit 102 entartetes Gewebe zeigen, mit Fähnchen markiert sind, wird ersichtlich, dass eine solche Markierung den Vorteil hat, dass selbst bei verhältnismäßig geringem Vergrößerungsgrad des Schnittbilds 10` im Analysebereich 40 die wahrscheinlich entarteten Gewebegebiete gut lokalisiert werden können. Auf diese Weise kann der Nutzer leicht zu einer Einschätzung über die räumliche Verteilung der wahrscheinlich entarteten Gewebegebiete gelangen.

Die Markierung der zusammenhängenden Gebiete von Bildbereichen 20, die gemäß der Klassifizierung der Klassifizierungseinheit 102 entartetes Gewebe zeigen, ist nicht notwendigerweise eine zusätzliche Markierung neben der Markierung der Bildbereiche 20, die die gemäß der Klassifizierung der Klassifizierungseinheit 102 entartetes Gewebe zeigen, insbesondere nicht notwendigerweise eine zusätzliche Markierung innerhalb ein und derselben Darstellung der Anzeige 50. Die Markierung der zusammenhängenden Gebiete von Bildbereichen 20, die gemäß der Klassifizierung der Klassifizierungseinheit 102 entartetes Gewebe zeigen, kann also auch als einzige Markierung, insbesondere als einzige Markierung innerhalb ein und derselben Darstellung der Anzeige 50 vorgesehen sein.

Eine Nutzereigabe in Bezug auf eine Markierung eines zusammenhängenden Gebiets von Bildbereichen 20, die gemäß der Klassifizierung der Klassifizierungseinheit 102 entartetes Gewebe zeigen, kann dazu führen, dass das jeweils in dem Analysebereich 40 der Probendarstellung 80 angezeigte Schnittbild 10, 10' in dem Analysebereich 40 mit erhöhtem Vergrößerungsgrad und/oder hinsichtlich des zu der Markierung gehörigen Gebietes zentriert angezeigt wird. Ein solche Nutzereingabe kann beispielsweise ein Mausklick auf ein zur Markierung dienendes Fähnchen sein.

Wie in Fig. 4 beispielhaft und schematisch in dem Anzeigebereich 65 dargestellt, kann die Probendarstellung 80 zudem eine Eingabemaske aufweisen, über die der Nutzer für das jeweils ausgewählte Schnittbild 10, 10` einerseits die Gesamtanzahl der von ihm in diesem Schnittbild identifizierten Lymphknoten und andererseits die Anzahl der davon gemäß seiner Analyse entartetes Gewebe enthaltenden, d.h. in diesem Fall von Metastasen befallenen, Lymphknoten eingeben kann. Im dargestellten Fall hat der Nutzer beispielsweise zwei Lymphknoten in dem ausgewählten Schnittbild 10` erkannt, wobei er beide davon als tatsächlich befallen einschätzt.

Basierend auf einer entsprechenden Nutzereingabe kann die Anzeigeeinheit 103 die Anzeige 50 veranlassen, von der Probendarstellung 80 in die in Fig. 5A oder 5B beispielhaft und schematisch darstellte Schnittbilddarstellung 90 zu wechseln. Hierzu kann in der Probendarstellung 80 eine eigene Schaltfläche vorgesehen sein. In der Schnittbilddarstellung 90 kann dann das zuvor in der Probendarstellung 80 ausgewählte Schnittbild 10, 10', das heißt das zuletzt aktive Schnittbild 10, 10', zur genaueren Analyse durch den Nutzer angezeigt werden.

Die in Fig. 5A gezeigte Schnittbilddarstellung 90 weist einen eigenen Auswahlbereich 61 auf, in dem eigene Auswahlelemente 71 angezeigt werden, die jeweils einem Gebiet des zu der Schnittbilddarstellung 90 gehörigen Schnittbilds entsprechen, das gemäß der Klassifizierung der Klassifizierungseinheit 102 entartetes Gewebe zeigt. Zudem weist die Schnittbilddarstellung 90 in dem in Fig. 5A dargestellten Fall zwei eigene Analysebereiche 41a, 41b auf, in denen dasjenige der wahrscheinlich entartetes Gewebe enthaltenden Gebiete des Schnittbilds 10, 10' angezeigt wird, das einem durch den Nutzer ausgewählten Auswahlelement 71 aus dem Auswahlbereich 61 der Schnittbilddarstellung 90 entspricht. In dem ersten Analysebereich 41a wird ein Ausschnitt des Schnittbilds 10, 10` mit einem ersten Vergrößerungsgrad angezeigt, der dem jeweils ausgewählten Gebiet entspricht, und in dem zweiten Analysebereich 41b wird ein Ausschnitt aus dem in dem ersten Analysebereich 41a gezeigten Ausschnitt angezeigt, in diesem Fall an dem Zentrum des als entartet klassifizierten Gewebes des ausgewählten Gebietes ausgerichtet. Der Vergrößerungsgrad des ersten Analysebereichs 41a ist kleiner als der Vergrößerungsgrad des zweiten Analysebereichs 41b, sodass dem Nutzer ermöglicht wird, in dem zweiten Analysebereich das als entartet klassifizierte Gewebe im Detail zu betrachten und gleichzeitig die Lage des Gewebegebietes anhand des ersten Analysebereichs 41a im Blick zu behalten.

Wie in Fig. 5A zu sehen ist, können auch die Auswahlelemente 71 des Auswahlbereichs 61 der Schnittbilddarstellung 90 Piktogramme enthalten, wobei in diesem Fall die Piktogramme das den jeweiligen Auswahlelementen 71 entsprechende als entartet markierte Gebiet des Schnittbilds zeigen.

In dem Analysebereich 41 der Schnittbilddarstellung 90 sind die als entartetes Gewebe zeigend klassifizierten Bildbereiche des Schnittbilds einerseits durch andersfarbige, das heißt im Vergleich zu den nicht als entartetes Gewebe zeigend klassifizierten Bildbereichen, Umrandungen markiert, und andererseits dadurch, dass sie gegenüber den nicht als entartetes Gewebe zeigend klassifizierten Bildbereichen mit einem erhöhten Kontrast und erhöhter Helligkeit angezeigt werden. Umgekehrt könnte die letztgenannte Markierungsart auch so verstanden werden, dass die als kein entartetes Gewebe zeigend klassifizierten Bildbereiche des Schnittbilds ausgegraut oder maskiert angezeigt werden. Dies lenkt den Fokus des Nutzers auf natürliche Weise auf die relevanten Bildbereiche des Schnittbilds.

Wie schon der Auswahlbereich 60 der Probendarstellung 80, weist auch der Auswahlbereich 61 der Schnittbilddarstellung 90 am rechten Rand einen Scroll-Balken auf, mit dem der Nutzer durch die den verschiedenen Gebieten entsprechenden Auswahlelemente 71 scrollen kann. Zudem weist die Schnittbilddarstellung 90 in einem Anzeigebereich 66 - in dem in Fig. 5A gezeigten Fall unterhalb des zweiten Analysebereichs 41b - Schaltflächen auf, die der Nutzer betätigen kann, um die von der Klassifizierungseinheit 102 ermittelte Klassifizierung zu bestätigen oder zu widerrufen. Der Nutzer hat auch die Möglichkeit, über eine der Schaltflächen zu hinterlegen, dass er sich hinsichtlich der Frage, ob das angezeigte Gebiet entartetes Gewebe enthält, unsicher ist. Als zusätzliches Sicherheitselement kann vorgesehen sein, dass der Nutzer unabhängig davon, welche der drei Einordnungen er vorgenommen hat, seine Entscheidung durch Betätigen eines separaten Bedienelements bestätigen muss. Die Bestätigung seiner Einordnung kann dazu führen, dass unmittelbar das nächste der als entartetes Gewebe zeigend klassifizierten Gebiete des Schnittbilds angezeigt wird. Auf diese Weise kann der Nutzer sich von Gebiet zu Gebiet vorarbeiten, bis er alle von der Klassifizierungseinheit 102 vorläufig als entartet klassifizierten Gebiete gesehen und eingeordnet hat. Der Fortschritt dieses Vorgangs, der auch als Befundungsprozess verstanden werden könnte, kann durch Balken und/oder numerische Anzeigen ebenfalls in der Schnittbilddarstellung 90 dargestellt werden, wie in Fig. 5A beispielsweise unterhalb der für die Einordnung durch den Nutzer vorgesehenen Schaltflächen zu sehen ist. Der obere der beiden in Fig. 5A gezeigten Balken zeigt den Befundungsfortschritt innerhalb eines Schnittbilds an, während der untere der beiden Balken den Befundungsfortschritt über die Schnittbilder hinweg, das heißt innerhalb einer Gewebeprobe bzw. eines Falls anzeigt.

Vorzugsweise weist die Schnittbilddarstellung eine weitere Schaltfläche auf, die in Fig. 5A rechts von den für die Einordnung durch den Nutzer vorgesehenen Schaltflächen angeordnet ist, und dazu dient, dem Nutzer die Möglichkeit zu geben, einen Fall vorzeitig abzuschließen. Voraussetzung für ein vorzeitiges Abschließen eines Falls ist, dass mindestens ein von der Klassifizierungseinheit 102 als entartetes Gewebe zeigend klassifiziertes Gebiet zumindest eines der Schnittbilder der jeweiligen Gewebeprobe von dem Nutzer bestätigt worden ist. Die Feststellungseinheit 104 kann eingerichtet sein, auf eine Nutzereingabe, die einem vorzeitigen Abschließen entspricht, das heißt beispielsweise dem Betätigen einer entsprechenden Schaltfläche, das Vorliegen dieser Voraussetzung zu prüfen, und bei positivem Resultat dieser Prüfung die noch nicht von dem Nutzer eingeordneten Gebiete als "ungesehen" zu kennzeichnen und für diese die von der Klassifizierungseinheit 102 bestimmte Klassifizierung zu hinterlegen. Zudem kann die Feststellungseinheit 104 eingerichtet sein, anschließend einen positiven Befund für den Fall oder zumindest die zu dem von dem Nutzer bestätigten Gebiet gehörige Gewebeprobe anzunehmen. Je eher der Nutzer die Fallbearbeitung abschließt, desto größer ist der Anteil der Klassifizierungsergebnisse, die allein durch die Klassifizierungseinheit 102, das heißt ohne Bestätigung oder Widerruf durch den Nutzer, zustande gekommen sein werden. Unabhängig davon, ob der Nutzer den Befundungsprozess vorzeitig abgeschlossen hat oder nicht, kann er sich nach Abschluss der Befundung eines Falls in einer abschließenden Übersicht das Befundungsergebnis anzeigen lassen.

Die in Fig. 5B gezeigte Schnittbilddarstellung 90' ist als beispielhafte Alternative zu der Schnittbilddarstellung 90 aus Fig. 5A zu verstehen. Der Unterschied zwischen der Schnittbilddarstellung 90 und der Schnittbilddarstellung 90' besteht lediglich darin, dass in der Schnittbilddarstellung 90' statt einer einzigen Schaltfläche ("Tumor") zur Bestätigung dessen, dass das jeweils angezeigte Gebiet des Schnittbilds entartetes Gewebe enthält, zwei Schaltflächen ("Extrakapsuläre Metastase", "Intrakapsuläre Metastase") vorgesehen sind, die es dem Nutzer ermöglichen, das jeweils angezeigte Gebiet danach zu kennzeichnen, ob es entartetem Gewebe innerhalb oder außerhalb eines Lymphknotens entspricht. Der Nutzer kann in dieser Variante, die einer Modifikation des Anzeigebereichs 66 der Schnittbilddarstellung 90 aus Fig. 5A hin zu einem Anzeigebereich 66' entspricht, die Klassifizierung der Klassifizierungseinheit also noch weiter verfeinern.

Die Anzeigeeinheit 103 kann eingerichtet sein, die Anzeige 50 zu veranlassen, in eine Übersichtsdarstellung zu wechseln, aus der für den Nutzer das Befundungsergebnis hervorgeht. Diese kann beispielsweise Anzeigeelemente mit folgendem Informationsgehalt aufweisen:
1. Grundlegende Fall-Informationen (Fall-Nr., Patienten-Name, ID, usw.),
2. Anzahl analysierter Schnittbilder bzw. Objektträger (OT) im Verhältnis zu der Anzahl an gescannten OT,
3. Anzahl an OT mit Metastasen (nach abschließender Bewertung durch den Nutzer) im Verhältnis zu der Anzahl analysierter OT,
4. Anzahl befallener Lymphknoten im Verhältnis zu der Anzahl gefundener Lymphknoten, und/oder
5. Auflistung aller OT mit Ergebnissen bzw. Kennwerten als Schnellzugriff für den Nutzer, um ggf. eine Revision durchzuführen.

Für die Beurteilung des Lymphknotenstatus eines Falls kann es entscheidend sein, wie viele von den untersuchten Lymphknoten (LK) konkret befallen sind. Dies kann der Benutzer zwar auch manuell (bspw. durch Notizen mit Stift u. Papier) während der Befundung bestimmen. Vorgesehen ist aber vorzugsweise, dass der Nutzer bei jedem OT die Möglichkeit bekommt, selbst die Anzahl der abgebildeten und befallenen LK einzutragen und daraus die relevante Darstellung der Kennzahlen für den gesamten Fall abzuleiten. In der Probendarstellung 80 und/oder der Schnittbilddarstellung 90 können zu diesem Zweck neben den bereits beschriebenen Elementen weitere interaktive Elemente für den Nutzer angezeigt werden, über die Nutzereingaben hinsichtlich der Anzahl der in einem Schnittbild gezeigten und der davon mit Metastasen befallenen Lymphknoten vorgenommen werden können. In Fig. 4 sind diese beispielhaft und schematisch in dem Anzeigebereich 65 dargestellt.

Neben der Verringerung der Arbeitsbelastung für den Nutzer kann die Effizienz bei der bildbasierten Erkennung von Gewebeentartungen auch durch eine ressourcenschonendere Maschinenleistung gesteigert werden. In dem Bestreben, die Klassifizierung durch die Klassifizierungseinheit 102 ressourcenschonender zu gestalten, hat sich gezeigt, dass es sinnvoll sein kann, die Klassifizierungseinheit 102 zweigliedrig zu gestalten, nämlich so, dass in den Schnittbildern zunächst jene Bildbereiche erkannt werden, die überhaupt Gewebe zeigen, und erst anschließend innerhalb der überhaupt Gewebe zeigenden Bildbereiche jene Bildbereiche erkannt werden, die entartetes Gewebe zeigen. Dies ist besonders vorteilhaft für die Erkennung von entartetem Gewebe in Bildern wie den in den Fig. 2 bis 5 gezeigten histologischen Bildern, da in solchen Bildern, durch die Präparierung der Gewebeprobenschichten auf für die Mikroskopie geeigneten Objektträgern bedingt, der Großteil der Bildfläche kein Gewebe zeigt. Es würde also unnötig Rechenkapazität in Anspruch genommen, wenn alle Bildbereiche für die Suche nach Gewebeentartungen freigegeben würden. Die Klassifizierungseinheit 102 ist daher bevorzugt eingerichtet, aus den Schnittbildern 10, 10' Gewebe zeigende Bildbereiche 20 zu extrahieren und mittels des trainierten künstlichen neuronalen Netzes lediglich Bildbereiche 20 innerhalb der extrahierten, Gewebe zeigenden Bildbereiche 20 der Schnittbilder 10, 10` gemäß ihrer Wahrscheinlichkeit dafür zu klassifizieren, dass sie entartetes Gewebe 30 zeigen. Die Formulierung "innerhalb der" ist hier so zu verstehen, dass die dem trainierten künstlichen neuronalen Netz zur Klassifizierung übergebenen Bildbereiche den zuvor als Gewebe zeigend extrahierten Bildbereichen entsprechen oder eine Untermenge dieser bilden. Die Extraktion der Gewebe zeigenden Bildbereiche kann von der Klassifizierungseinheit 102 mittels eines für diese Aufgabe eigens trainierten, das heißt weiteren, künstlichen neuronalen Netzes erreicht werden, das als "Gewebedetektor" bezeichnet werden kann.

Die Schnittbilder 10, 10', die in den Fig. 2 bis 5 zu sehen sind, sind mittels Hämatoxylin-Eosin-Färbung erstellte histologische Bilder. Dementsprechend wurden beide der verwendeten künstlichen neuronale Netze anhand von ebenfalls durch Hämatoxylin-Eosin-Färbung erstellten histologischen Bildern trainiert. Zudem zeigen die in den Fig. 2 bis 5 dargestellten Schnittbilder 10, 10` auf Objektträgern präparierte Teile einer Gewebeprobe, die einem Lymphknoten eines Patienten entnommen wurde, wobei die markierten Bildbereiche 20 in den Schnittbildern 10, 10' der Fig. 2 bis 5 Metastasengewebe eines kolorektalen Karzinoms enthalten. Dementsprechend wurden beide verwendeten künstlichen neuronalen Netze anhand von Schnittbildern 10, 10' von Lymphknoten-Gewebeproben trainiert, die teilweise von Metastasen kolorektaler Karzinome befallen waren.

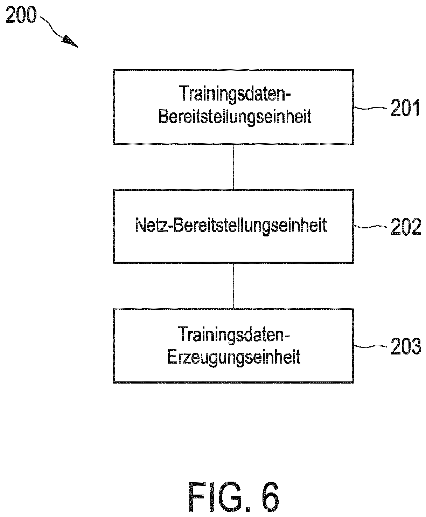

Fig. 6 zeigt beispielhaft und schematisch ein System 200 zum Erzeugen von Trainingsdaten für ein künstliches neuronales Netz wie beispielsweise das künstliche neuronale Netz der Klassifizierungseinheit 102 des Systems 100. Das System 200 umfasst eine Trainingsdaten-Bereitstellungseinheit 201, die eingerichtet ist, erste Trainingsdaten bereitzustellen. Die ersten Trainingsdaten sind in Paaren aus ersten Trainingseingangsdaten und zugehörigen ersten Trainingsausgangsdaten strukturiert, wobei die ersten Trainingseingangsdaten ersten Bildbereichen 21 von ersten Schnittbildern 10, 10' einer Vielzahl von Gewebeproben entsprechen, die teilweise Gewebeentartungen aufweisen, und die ersten Trainingsausgangsdaten bezüglich der ersten Bildbereiche 21 getroffenen Feststellungen entsprechen, ob diese entartetes Gewebe 30 zeigen. Die ersten Trainingsdaten können beispielsweise 500.000 Paaren aus ersten Trainingseingangsdaten und zugehörigen ersten Trainingsausgangsdaten entsprechen, wobei die ersten Trainingsdaten manuell erzeugt worden sein können. Das heißt, dass zum Erzeugen der ersten Trainingsdaten geschultes Personal die zum Training verwendeten Bildbereiche 21 durchgesehen und für jeden der Bildbereiche 21 eine Feststellung getroffen haben kann, ob dieser entartetes Gewebe 30 zeigt oder nicht. Das Treffen dieser Feststellungen, das heißt das Erzeugen der Trainingsausgangsdaten, kann auch als "Labeling" verstanden werden.

Das System 200 weist ferner eine Netzbereitstellungseinheit 202 auf, die eingerichtet ist, ein künstliches neuronales Netz bereitzustellen, das mit den ersten Trainingsdaten trainiert worden ist, entartetes Gewebe 30 zeigende Bildbereiche zu bestimmen. Das künstliche neuronale Netz kann also beispielsweise zunächst als Prototyp bereitgestellt worden sein und anschließend anhand der manuell erzeugten ersten Trainingsdaten trainiert worden sein.

Das System 200 weist ferner eine Trainingsdaten-Erzeugungseinheit 203 auf, die eingerichtet ist, zweite Trainingsdaten zu erzeugen, die in Paaren aus zweiten Trainingseingangsdaten und zugehörigen zweiten Trainingsausgangsdaten strukturiert sind. Die zweiten Trainingseingangsdaten entsprechen zweiten Bildbereichen 22 entweder der ersten Schnittbilder 10, 10', das heißt der Schnittbilder 10, 10` der zum Training des künstlichen neuronalen Netzes verwendeten ersten Trainingsdaten, und/oder zweiter, das heißt noch nicht verwendeter Schnittbilder 10, 10` der Vielzahl von Gewebeproben. Die zweiten Schnittbilder 10, 10' können Bilder von bereits zum Training verwendeten Gewebeproben sein oder Bilder von Gewebeproben, die noch nicht zum Training verwendet worden sind, das heißt aus denen keine ersten Trainingseingangsdaten gewonnen worden sind. Es versteht sich, dass auch die zweiten Schnittbilder zuvor von einer dazu vorgesehenen Einheit des System 200 bereitgestellt worden sind.

Die Trainingsdaten-Erzeugungseinheit 203 des Systems 200 ist eingerichtet, als zweite Bildbereiche 22 solche Bildbereiche der ersten Schnittbilder 10, 10` auszuwählen, die mit solchen ersten Bildbereichen 21 überlappen, die gemäß den ersten Trainingsausgangsdaten entartetes Gewebe 30 zeigen. Alternativ oder zusätzlich ist die Trainingsdaten-Erzeugungseinheit 203 eingerichtet, mittels des trainierten künstlichen neuronalen Netzes in den zweiten Schnittbildern 10, 10' Bildbereiche 21 zu bestimmen, die entartetes Gewebe 30 zeigen, und als zweite Bildbereiche 22 solche Bildbereiche der zweiten Schnittbilder 10, 10` auszuwählen, die mit solchen Bildbereichen 21 der zweiten Schnittbilder 10, 10` überlappen, für die mittels des trainierten künstlichen neuronalen Netzes bestimmt worden ist, dass sie entartetes Gewebe 30 zeigen.

Die zweiten Trainingsausgangsdaten werden von der Trainingsdaten-Erzeugungseinheit 203 erzeugt, indem dem bereitgestellten, das heißt anhand der ersten Trainingsdaten trainierten, künstlichen neuronalen Netz die zweiten Bildbereiche 22 als Eingangsdaten übergeben werden, wobei die zweiten Trainingsausgangsdaten basierend auf den daraufhin von dem künstlichen neuronalen Netz ausgegebenen Ausgangsdaten und zusätzlich einer Nutzereingabe bestimmt werden, die indikativ für eine Bestätigung der von dem künstlichen neuronalen Netz für die zweiten Bildbereiche 22 ausgegebenen Ausgangsdaten durch den Nutzer ist.

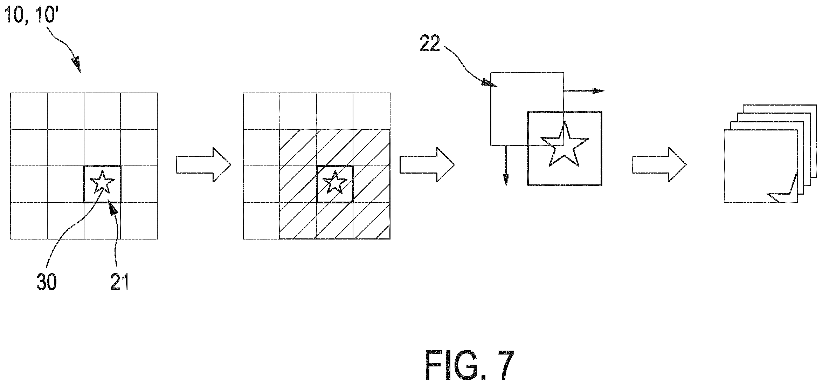

Die Erzeugung der zweiten Trainingsdaten, die wegen der Einbindung des Nutzers als semi-automatisierter Prozess verstanden werden kann, ist in Fig. 7 beispielhaft und schematisch dargestellt. In dem dargestellten Fall hat das anhand der ersten Trainingsdaten trainierte künstliche neuronale Netz der Trainingsdatenerzeugungseinheit 203, das insoweit noch als Prototyp bezeichnet werden könnte, in dem in 4 × 4 kachelförmige erste Bildbereiche 21 unterteilten Schnittbild 10, 10' in einem der Bildbereiche entartetes Gewebe 30 erkannt, das in Fig. 7 durch einen Stern symbolisiert wird. Das Schnittbild 10, 10' kann ein (erstes) Schnittbild sein, das bereits als Teil der ersten Trainingseingangsdaten zum Training des künstlichen neuronalen Netzes verwendet worden ist, sodass das Sternsymbol als Label aufgefasst werden könnte. Ebenso gut könnte das Schnittbild 10, 10` einem noch nicht zum Training verwendeten (zweiten) Schnittbild einer Gewebeprobe entsprechen, in dem das anhand der ersten Trainingsdaten trainierte künstliche neuronale Netz das entartete Gewebe 30 erkannt hat. Es versteht sich, dass ein Erkennen einer Gewebeentartung 30 durch das künstliche neuronale Netz vorliegend lediglich als ein Erkennen mit einer gewissen Wahrscheinlichkeit, das heißt ohne vollständige Gewissheit, verstanden wird.

In einem weiteren in Fig. 7 dargestellten Schritt, der von der Trainingsdaten-Erzeugungseinheit 203 ausgeführt werden kann, wird ein Trainingsdaten-Erzeugungsbereich bestimmt, der einem Bereich des Schnittbildes 10, 10' entspricht, der den Bildbereich 21 umfasst, in dem entartetes Gewebe 30 erkannt worden ist, aber über diesen Bildbereich hinausgeht. Wie in Fig. 7 zu sehen ist, kann der Trainingsdaten-Erzeugungsbereich neben dem Bildbereich 21, in dem entartetes Gewebe 30 erkannt worden ist, aus allen an diesen Bildbereich 21 angrenzenden Bildbereichen 21 bestehen. Der Trainingsdaten-Erzeugungsbereich, der in Fig. 7 schraffiert dargestellt ist, kann auch als Region-of-Interest bezeichnet werden.

In einem weiteren in Fig. 7 dargestellten Schritt der Erzeugung der zweiten Trainingsdaten werden aus dem Trainingsdaten-Erzeugungsbereich zweite Bildbereiche 22 zur Verwendung als zweite Trainingseingangsdaten ausgewählt. Die zweiten Bildbereiche 22 können, wie in Fig. 7 dargestellt ist, dieselbe Form wie die ersten Bildbereiche 21, das heißt beispielsweise eine kachelartige Form, aufweisen. Zur Auswahl der zweiten Bildbereiche aus dem Trainingsdaten-Erzeugungsbereich kann die Trainingsdaten-Erzeugungseinheit 203 eingerichtet sein, ein virtuelles Extraktionsfenster innerhalb des Trainingsdaten-Erzeugungsbereichs, insbesondere über den gesamten Trainingsdaten-Erzeugungsbereich hinweg, zu verschieben und an verschiedenen Positionen des Extraktionsfensters dem jeweils von dem Extraktionsfenster eingerahmten Bildbereich entsprechende zweite Bildbereiche 22 zu extrahieren. Der Trainingsdaten-Erzeugungsbereich, das Extraktionsfenster und die Positionen, an denen die zweiten Bildbereiche 22 extrahiert werden, sind so gewählt, dass die zweiten Bildbereiche 22 mit dem Bildbereich 21 überlappen, in dem das künstliche neuronale Netz entartetes Gewebe 30 erkannt hat. Wie in Fig. 7 dargestellt ist, kann die Trainingsdaten-Erzeugungseinheit 203 beispielsweise eingerichtet sein, die zweiten Bildbereiche 22 so auszuwählen, dass die Bildbereiche 21, in denen das künstliche neuronale Netz entartetes Gewebe 30 erkannt hat, vollständig auf die zweiten Bildbereiche 22 aufgeteilt sind. Dadurch, dass die zweiten Bildbereiche 22 mit Bildbereichen 21 überlappen, für die entweder mittels manueller Feststellungen oder mittels des trainierten künstlichen neuronalen Netzes die Anwesenheit von entartetem Gewebe bestimmt worden ist, wird sichergestellt, dass die zweiten Trainingseingangsdaten zumindest teilweise Bildbereichen entsprechen, die entartetes Gewebe 30 zeigen. Allerdings zeigen nicht notwendigerweise alle zweiten Bildbereiche 22 entartetes Gewebe, da in den meisten Fällen die Bildbereiche 21, für die die Anwesenheit von entartetem Gewebe bestimmt worden ist, nicht vollständig von dem entarteten Gewebe ausgefüllt sein werden, sodass die Möglichkeit besteht, dass in den Überlappungsbereichen mit den zweiten Bildbereichen 22 kein entartetes Gewebe gezeigt ist. Nicht alle zweiten Trainingseingangsdaten entsprechen also notwendigerweise Bildbereichen 22, die entartetes Gewebe 30 zeigen. Dies ermöglicht die Erzeugung ausgewogener und damit für ein qualitativ hochwertiges Training geeigneter Trainingsdaten.

Die ausgewählten zweiten Bildbereiche 22, das heißt beispielsweise die in Fig. 7 ganz rechts schematisch dargestellten Kacheln des Schnittbilds 10, 10', werden von der Trainingsdaten-Erzeugungseinheit 203 in einem weiteren Schritt dem trainierten künstlichen neuronalen Netz als Eingangsdaten übergeben, woraufhin das neuronale Netz Ausgangsdaten ausgibt, die einer von dem neuronalen Netz ermittelten Wahrscheinlichkeit oder einer auf einer solchen Wahrscheinlichkeit basierenden Entscheidung darüber entsprechen, ob die jeweiligen Bildbereiche 22 entartetes Gewebe 30 zeigen oder nicht. Das Schnittbild 10, 10` kann dem Nutzer, beispielsweise in der Anzeige 50, so angezeigt werden, dass die Bildbereiche 22 entsprechend den von dem neuronalen Netz ausgegebenen Ausgangsdaten markiert sind. Der Nutzer kann dann über eine entsprechende Nutzereingabe, wie etwa einen Mausklick oder eine Berührung eines für die Anzeige verwendeten Touchscreens, die Markierungen, und damit die von dem künstlichen neuronalen Netz ausgegebenen Ausgangsdaten, bestätigen oder widerrufen. Basierend auf der Nutzereingabe werden die zu den zweiten Bildbereichen 22 entsprechenden zweiten Trainingseingangsdaten gehörigen zweiten Trainingsausgangsdaten erzeugt. Beispielsweise können als zweite Trainingsausgangsdaten jene von dem künstlichen neuronalen Netz für die zweiten Bildbereiche 22 ausgegebenen Ausgangsdaten angenommen werden, die der Nutzer bestätigt hat. Es ist also nicht unbedingt notwendig, dass der Nutzer bezüglich aller zweiten Bildbereiche des Schnittbilds 10, 10' eine Nutzereingabe tätigt. Die zweiten Trainingsdaten werden zu dem die ersten Trainingsdaten aufweisenden Trainingsdatensatz hinzugefügt.

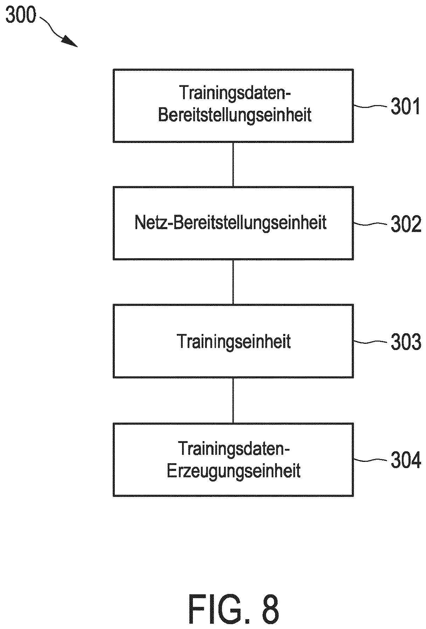

Fig. 8 zeigt beispielhaft und schematisch ein System 300 zum Trainieren eines künstlichen neuronalen Netzes wie beispielsweise des künstlichen neuronalen Netzes der Klassifizierungseinheit 102 des Systems 100. Das System 300 umfasst eine Trainingsdaten-Bereitstellungseinheit 301, die eingerichtet ist, erste Trainingsdaten bereitzustellen, die in Paaren aus ersten Trainingseingangsdaten und zugehörigen ersten Trainingsausgangsdaten strukturiert sind, wobei die ersten Trainingseingangsdaten ersten Bildbereichen 21 von ersten Schnittbildern 10, 10' einer Vielzahl von Gewebeproben entsprechen, die teilweise Gewebeentartungen aufweisen, und die ersten Trainingsausgangsdaten bezüglich der ersten Bildbereiche 21 getroffenen Feststellungen entsprechen, ob diese entartetes Gewebe 30 zeigen. Die Trainingsdaten-Bereitstellungseinheit 301 des Systems 300 kann der Trainingsdaten-Bereitstellungseinheit 201 des Systems 200 entsprechen.

Das System 300 umfasst des Weiteren eine Netz-Bereitstellungseinheit 302, die eingerichtet ist, das zu trainierende künstliche neuronale Netz bereitzustellen. Das von der Netzbereitstellungseinheit 302 bereitgestellte künstliche neuronale Netz kann also insbesondere ein noch nicht trainiertes künstliches neuronales Netz sein. Insoweit kann sich die Netz-Bereitstellungseinheit 302 des Systems 300 von der Netz-Bereitstellungseinheit 202 unterscheiden.

Das System 300 umfasst ferner eine Trainingseinheit 303, die eingerichtet ist, das zu trainierende künstliche neuronale Netz vorläufig so zu trainieren, dass das vorläufig trainierte künstliche neuronale Netz, wenn es die ersten Trainingseingangsdaten als Eingangsdaten erhält, Ausgangsdaten ausgibt, die den zu den erhaltenen ersten Trainingseingangsdaten gehörigen ersten Trainingsausgangsdaten entsprechen. Das vorläufig trainierte künstliche neuronale Netz kann dem von der Netz-Bereitstellungseinheit 202 des Systems 200 bereitgestellten künstlichen neuronalen Netz entsprechen.

Das System 300 umfasst zudem eine Trainingsdaten-Erzeugungseinheit 304, die eingerichtet ist, zweite Trainingsdaten zu erzeugen, die in Paaren aus zweiten Trainingseingangsdaten und zugehörigen zweiten Trainingsausgangsdaten strukturiert sind, wobei die zweiten Trainingseingangsdaten zweiten Bildbereichen 22 der ersten und/oder zweiter Schnittbilder 10, 10` der Vielzahl von Gewebeproben entsprechen. Die Trainingsdaten-Erzeugungseinheit 304 ist eingerichtet, als zweite Bildbereiche 22 solche Bildbereiche der ersten Schnittbilder 10, 10` auszuwählen, die mit solchen ersten Bildbereichen 21 überlappen, die gemäß den ersten Trainingsausgangsdaten entartetes Gewebe 30 zeigen, und/oder mittels des vorläufig trainierten künstlichen neuronalen Netzes in den zweiten Schnittbildern 10, 10' Bildbereiche 21 zu bestimmen, die entartetes Gewebe 30 zeigen, und als zweite Bildbereiche 22 solche Bildbereiche der zweiten Schnittbilder 10, 10` auszuwählen, die mit solchen Bildbereichen 21 der zweiten Schnittbilder überlappen, für die mittels des vorläufig trainierten künstlichen neuronalen Netzes bestimmt worden ist, dass sie entartetes Gewebe 30 zeigen. Ferner ist die Trainingsdaten-Erzeugungseinheit 304 eingerichtet, dem vorläufig trainierten künstlichen neuronalen Netz die zweiten Bildbereiche 22 als Eingangsdaten zu übergeben und die zweiten Trainingsausgangsdaten basierend auf den daraufhin von dem vorläufig trainierten künstlichen neuronalen Netz ausgegebenen Ausgangsdaten und zudem einer Nutzereingabe zu bestimmen, die indikativ für eine Bestätigung der von dem vorläufig trainierten künstlichen neuronalen Netz für die zweiten Bildbereiche 22 ausgegebenen Ausgangsdaten durch den Nutzer ist. Die Trainingsdaten-Erzeugungseinheit 304 des Systems 300 kann also der Trainingsdaten-Erzeugungseinheit 203 des Systems 200 entsprechen. Insbesondere kann auch die Erzeugung der zweiten Trainingsdaten durch das System 300 als semi-automatisierter Prozess verstanden werden, da sowohl das vorläufig trainierte neuronale Netz verwendet wird, aus auch auf eine Bestätigung durch den Nutzer zurückgegriffen wird.

Die Trainingseinheit 303 des Systems 300 ist eingerichtet, das vorläufig trainierte künstliche neuronale Netz ergänzend so zu trainieren, dass das ergänzend trainierte künstliche neuronale Netz, wenn es die ersten und/oder zweiten Trainingseingangsdaten als Eingangsdaten erhält, Ausgangsdaten ausgibt, die den zu den erhaltenen ersten und/oder zweiten Trainingseingangsdaten gehörigen ersten und/oder zweiten Trainingsausgangsdaten entsprechen. Das bereits vorläufig anhand der ersten Trainingsdaten trainierte künstliche neuronale Netz wird also ergänzend anhand der ersten und/oder zweiten Trainingsdaten ergänzend trainiert.

Die Schritte der Erzeugung zweiter Trainingsdaten und das ergänzende Training des künstlichen neuronalen Netzes anhand des um die zweiten Trainingsdaten ergänzten Trainingsdatensatzes können wiederholt werden, bis das künstliche neuronale Netz entartetes Gewebe mit einer zufriedenstellenden Sicherheit, die einer vorbestimmten Genauigkeit entsprechen kann, erkennt.

Der Vorteil der beschriebenen semi-automatisierten Erzeugung zweiter Trainingsdaten besteht darin, dass in verhältnismäßig kurzer Zeit der Trainingsdatensatz um ein Vielfaches vergrößert werden kann, ohne die Qualität der Trainingsdaten zu beeinträchtigen. Ein größerer Trainingsdatensatz ermöglicht das Training größerer künstlicher neuronaler Netze, welche wiederum die komplexen bildmorphologischen Zusammenhänge in Bildern von Gewebeproben, wie sie insbesondere in histologischen Bildern von Lymphknotenmetastasen kolorektaler Karzinome zu finden sind, besser abbilden können.

Sowohl das vorläufige als auch das ergänzende Training können in Form eines überwachten Lernens durchgeführt werden, bei dem künstlichen neuronalen Netz Paare aus jeweiligen Bildbereichen entsprechenden Trainingseingangsdaten und jeweiligen Trainingsausgangsdaten übergeben werden, die auch als Labels verstanden werden können. Während für das vorläufige Training ein manuelles Labeling vorausgesetzt wird, kann, wie bereits ausgeführt, für das ergänzende Training ein Labeling verwendet werden, das semi-automatisiert erzeugt wird, nämlich einerseits durch Analyseergebnisse des vorläufig trainierten neuronalen Netzes und andererseits durch eine Bestätigung dieser Ergebnisse durch einen Nutzer.

Die Bildbereiche können dem künstlichen neuronalen Netz in jedem Stadium des Trainings vorverarbeitet übergeben werden. Dabei können bekannte Methoden der Bild-Augmentation, beispielsweise in Form einer Online-Augmentation, eingesetzt werden. Die Bildbereiche können beispielsweise gespiegelt, rotiert, in ihrem Kontrast geändert, in ihrer Helligkeit geändert oder in ihrer Qualität geändert werden, bevor sie dem künstlichen neuronalen Netz übergeben werden.

Für das vorläufige Training des künstlichen neuronalen Netzes kann vorgesehen sein, dass zunächst mit einer verhältnismäßig kleinen Menge von ersten Trainingsdaten trainiert wird, das Trainingsergebnis, das heißt die erzielte Genauigkeit des insoweit trainierten künstlichen neuronalen Netzes, dann anhand von Validierungsdaten gemessen wird und anschließend, falls die Genauigkeit noch nicht ausreichend ist, der Trainingsdatensatz vergrößert wird, um das künstliche neuronale Netz anhand des vergrößerten Trainingsdatensatzes weiter zu trainieren. Diese sukzessive Vergrößerung der Menge von ersten Trainingsdaten während des vorläufigen Trainings kann wiederholt werden, bis eine vorbestimmte Genauigkeit erreicht ist.

Die Trainingsdaten-Bereitstellungseinheit 304 kann eingerichtet sein, erste Validierungsdaten bereitzustellen, die in Paaren aus ersten Validierungseingangsdaten und zugehörigen ersten Validierungsausgangsdaten strukturiert sind, wobei a) die ersten Validierungsdaten einem Teil der ersten Trainingsdaten entsprechen, der nicht von der Trainingseinheit 303 zum Training verwendet wird, oder wobei b) die ersten Validierungseingangsdaten dritten Bildbereichen von Schnittbildern einer Vielzahl von Gewebeproben entsprechen, die teilweise Gewebeentartungen aufweisen, und die ersten Validierungsausgangsdaten bezüglich der dritten Bildbereiche getroffenen Feststellungen entsprechen, ob diese entartetes Gewebe 30 zeigen. Die Feststellungen können manuell, semi-automatisiert durch manuelle Bestätigung von maschinell erzielten Klassifikationsergebnissen oder vollständig automatisiert unter Verwendung eines künstlichen neuronalen Netzes getroffen werden, von dem bekannt ist, dass es eine Klassifizierungsgenauigkeit über einer vorbestimmten Schwelle erzielt. Es versteht sich, dass das System 300 eine Einheit zum Bereitstellen der dritten Bildbereiche aufweisen kann.

Die Trainingseinheit 303 kann eingerichtet sein, das vorläufige Training durchzuführen, bis das künstliche neuronale Netz, wenn es die ersten Validierungseingangsdaten als Eingangsdaten erhält, Ausgangsdaten ausgibt, die in Bezug auf die ersten Validierungsausgangsdaten eine vorbestimmte Genauigkeit aufweisen. Die vorbestimmte Genauigkeit kann anhand eines Genauigkeitsmaßes gemessen werden, das über alle Validierungseingangsdaten definiert ist, wobei das Genauigkeitsmaß jenen Validierungsdatenpaaren ein höheres Gewicht zumessen kann, für die die getroffenen Feststellungen anzeigen, dass der jeweilige Bildbereich entartetes Gewebe 30 zeigt, als jenen Validierungsdatenpaaren, für die die getroffenen Feststellungen anzeigen, dass der jeweilige Bildbereich kein entartetes Gewebe 30 zeigt. Alternativ oder zusätzlich kann das Genauigkeitsmaß jenen Validierungsdatenpaaren ein höheres Gewicht zumessen, für die eine Feststellung getroffen worden ist, die anzeigt, dass der jeweilige Bildbereich ein Bildartefakt enthält, als jenen Validierungsdatenpaaren, für die die getroffenen Feststellungen anzeigen, dass der jeweilige Bildbereich kein entartetes Gewebe 30 zeigt. Die Gewichte, die das Genauigkeitsmaß den Validierungsdatenpaaren zumessen kann, für die die getroffenen Feststellungen anzeigen, dass der jeweilige Bildbereich a) entartetes Gewebe und b) ein Bildartefakt zeigt, können gleich oder unterschiedlich sein.

Bildartefakte können u.a. umfassen: Färbeartefakte (z.B. zu viel oder zu wenig Farbe), Stauchung des Gewebes, Scanartefakte (z.B. unscharfe Abbildung), Dateifehler (z.B. Bruchlinien im Bild durch fehlerhafte Daten), Anschnitt und Abbildung von Nicht-Gewebe (z.B. Fadenresten, Zellulose), Klumpen aus Farbe und Gewebe, Überlagerung mehrerer gefärbter Zellhaufen.

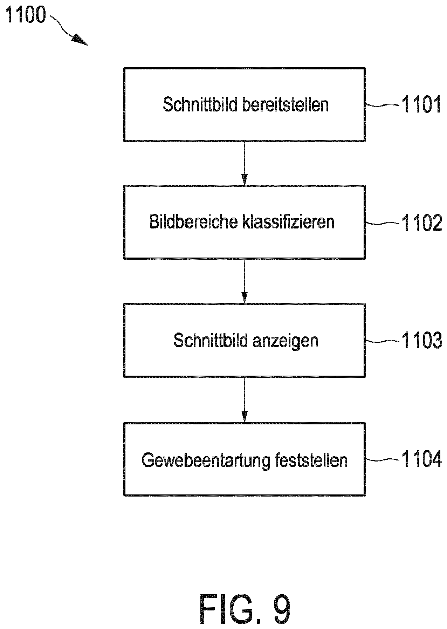

Fig. 9 zeigt beispielhaft und schematisch ein Verfahren 1100 zur Unterstützung eines Nutzers bei der bildbasierten Erkennung einer Gewebeentartung, wobei das Verfahren 1100 einen Schritt 1101 des Bereitstellens 1101 eines einer Mehrzahl an Schnittbildern 10, 10' einer Gewebeprobe umfasst, sowie zudem einen Schritt 1102 des Klassifizierens 1102 von Bildbereichen 20 des Schnittbildes 10, 10' gemäß ihrer Wahrscheinlichkeit dafür, dass sie entartetes Gewebe 30 zeigen, mittels eines trainierten künstlichen neuronalen Netzes. In einem Schritt 1103 des Verfahrens 1100 wird das Schnittbilds 10, 10' in einem Analysebereich 40 einer Anzeige 50 so angezeigt, dass Bildbereiche 20 des Schnittbildes 10, 10', die gemäß der Klassifizierung entartetes Gewebe 30 zeigen, in dem im Analysebereich 40 angezeigten Schnittbild 10, 10' markiert sind. In einem weiteren Schritt 1104 des Verfahrens 1100 wird eine Gewebeentartung in der Gewebeprobe basierend auf einer Nutzereingabe festgestellt, die indikativ für eine Bestätigung des Nutzers dessen ist, dass einer der markierten Bildbereiche 20 entartetes Gewebe 30 zeigt. Das Verfahren kann beispielsweise von dem System 100 ausgeführt werden.

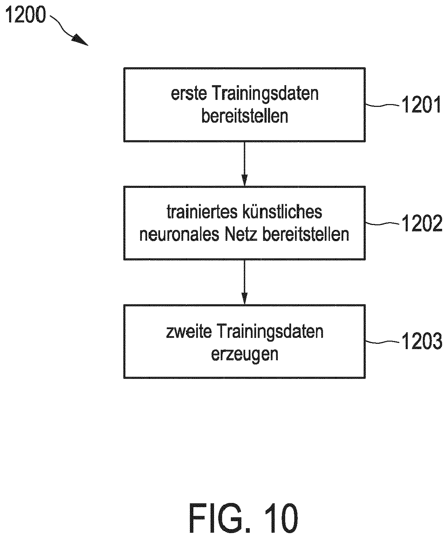

Fig. 10 zeigt beispielhaft und schematisch ein Verfahren 1200 zum Erzeugen von Trainingsdaten für ein künstliches neuronales Netz, wobei gemäß dem Verfahren 1200 in einem Schritt 1201 erste Trainingsdaten bereitgestellt werden, die in Paaren aus ersten Trainingseingangsdaten und zugehörigen ersten Trainingsausgangsdaten strukturiert sind, wobei die ersten Trainingseingangsdaten ersten Bildbereichen 21 von ersten Schnittbildern 10, 10' einer Vielzahl von Gewebeproben entsprechen, die teilweise Gewebeentartungen aufweisen, und die ersten Trainingsausgangsdaten bezüglich der ersten Bildbereiche 21 getroffenen Feststellungen entsprechen, ob diese entartetes Gewebe 30 zeigen. In einem Schritt 1202 des Verfahrens 1220 wird ein künstliches neuronales Netzes, das mit den ersten Trainingsdaten trainiert worden ist, entartetes Gewebe 30 zeigende Bildbereiche zu bestimmen bereitgestellt, wobei in einem Schritt 1203 des Verfahrens zweite Trainingsdaten erzeugt werden, die in Paaren aus zweiten Trainingseingangsdaten und zugehörigen zweiten Trainingsausgangsdaten strukturiert sind, wobei die zweiten Trainingseingangsdaten zweiten Bildbereichen 22 der ersten und/oder zweiter Schnittbilder 10, 10' der Vielzahl von Gewebeproben entsprechen. Dabei werden als zweite Bildbereiche 22 solche Bildbereiche der ersten Schnittbilder 10, 10' ausgewählt, die mit solchen ersten Bildbereichen 21 überlappen, die gemäß den ersten Trainingsausgangsdaten entartetes Gewebe 30 zeigen, wobei alternativ oder zusätzlich mittels des trainierten künstlichen neuronalen Netzes in den zweiten Schnittbildern 10, 10' Bildbereiche 21 bestimmt werden, die entartetes Gewebe 30 zeigen, und als zweite Bildbereiche 22 solche Bildbereiche der zweiten Schnittbilder 10, 10' ausgewählt werden, die mit solchen Bildbereichen 21 der zweiten Schnittbilder überlappen, für die mittels des trainierten künstlichen neuronalen Netzes bestimmt worden ist, dass sie entartetes Gewebe 30 zeigen. Dem bereitgestellten künstlichen neuronalen Netz werden die zweiten Bildbereiche 22 als Eingangsdaten übergeben, wobei die zweiten Trainingsausgangsdaten basierend auf den daraufhin von dem bereitgestellten künstlichen neuronalen Netz ausgegebenen Ausgangsdaten und einer Nutzereingabe bestimmt werden, die indikativ für eine Bestätigung des Nutzers der von dem vorläufig trainierten künstlichen neuronalen Netz für die zweiten Bildbereiche ausgegebenen Ausgangsdaten ist.

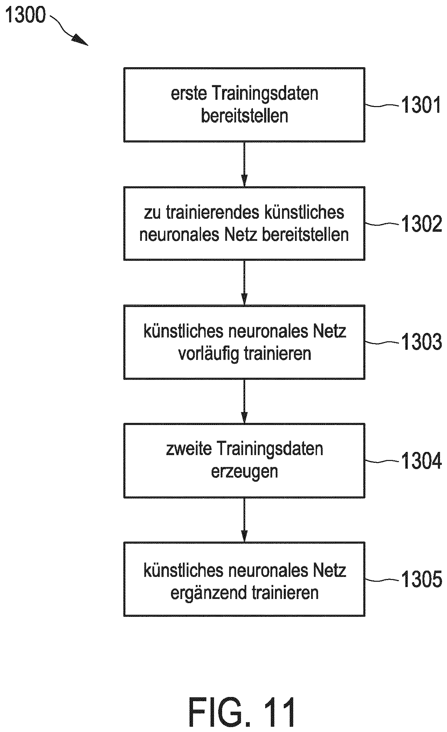

Fig. 11 zeigt beispielhaft und schematisch ein Verfahren 1300 zum Trainieren eines künstlichen neuronalen Netzes, wobei das Verfahren 1300 einen Schritt 1301 des Bereitstellens erster Trainingsdaten umfasst, die in Paaren aus ersten Trainingseingangsdaten und zugehörigen ersten Trainingsausgangsdaten strukturiert sind, wobei die ersten Trainingseingangsdaten ersten Bildbereichen 21 von ersten Schnittbildern 10, 10' einer Vielzahl von Gewebeproben entsprechen, die teilweise Gewebeentartungen aufweisen, und die ersten Trainingsausgangsdaten bezüglich der ersten Bildbereiche 21 getroffenen Feststellungen entsprechen, ob diese entartetes Gewebe 30 zeigen, ferner einen Schritt 1302 des Bereitstellens des zu trainierenden künstlichen neuronalen Netzes, sowie einen Schritt 1303 des vorläufigen Trainierens des zu trainierenden künstlichen neuronalen Netzes in der Art, dass das vorläufig trainierte künstliche neuronale Netz, wenn es die ersten Trainingseingangsdaten als Eingangsdaten erhält, Ausgangsdaten ausgibt, die den zu den erhaltenen ersten Trainingseingangsdaten gehörigen ersten Trainingsausgangsdaten entsprechen. Zudem weist das Verfahren 1300 in einem Schritt 1304 ein Erzeugen zweiter Trainingsdaten auf, die in Paaren aus zweiten Trainingseingangsdaten und zugehörigen zweiten Trainingsausgangsdaten strukturiert sind, wobei die zweiten Trainingseingangsdaten zweiten Bildbereichen 22 der ersten oder zweiter Schnittbilder 10, 10` der Vielzahl von Gewebeproben entsprechen. Dabei werden als zweite Bildbereiche 22 solche Bildbereiche der ersten Schnittbilder 10, 10' ausgewählt, die mit solchen ersten Bildbereichen 21 überlappen, die gemäß den ersten Trainingsausgangsdaten entartetes Gewebe 30 zeigen, und/oder es werden mittels des vorläufig trainierten künstlichen neuronalen Netzes in den zweiten Schnittbildern 10, 10' Bildbereiche 21 bestimmt, die entartetes Gewebe 30 zeigen, und als zweite Bildbereiche 22 solche Bildbereiche der zweiten Schnittbilder 10, 10' ausgewählt, die mit solchen Bildbereichen 21 der zweiten Schnittbilder überlappen, für die mittels des vorläufig trainierten künstlichen neuronalen Netzes bestimmt worden ist, dass sie entartetes Gewebe 30 zeigen. Dem vorläufig trainierten künstlichen neuronalen Netz werden die zweiten Bildbereiche 22 als Eingangsdaten übergeben, wobei die zweiten Trainingsausgangsdaten basierend auf den daraufhin von dem vorläufig trainierten künstlichen neuronalen Netz ausgegebenen Ausgangsdaten und einer Nutzereingabe bestimmt werden, die indikativ für eine Bestätigung des Nutzers der von dem vorläufig trainierten künstlichen neuronalen Netz für die zweiten Bildbereiche 22 ausgegebenen Ausgangsdaten ist. Das vorläufig trainierte künstliche neuronale Netz wird in einem weiteren Schritt 1305 des Verfahrens 1300 ergänzend trainiert, und zwar so, dass das ergänzend trainierte künstliche neuronale Netz, wenn es die ersten und/oder zweiten Trainingseingangsdaten als Eingangsdaten erhält, Ausgangsdaten ausgibt, die den zu den erhaltenen ersten und/oder zweiten Trainingseingangsdaten gehörigen ersten und/oder zweiten Trainingsausgangsdaten entsprechen.

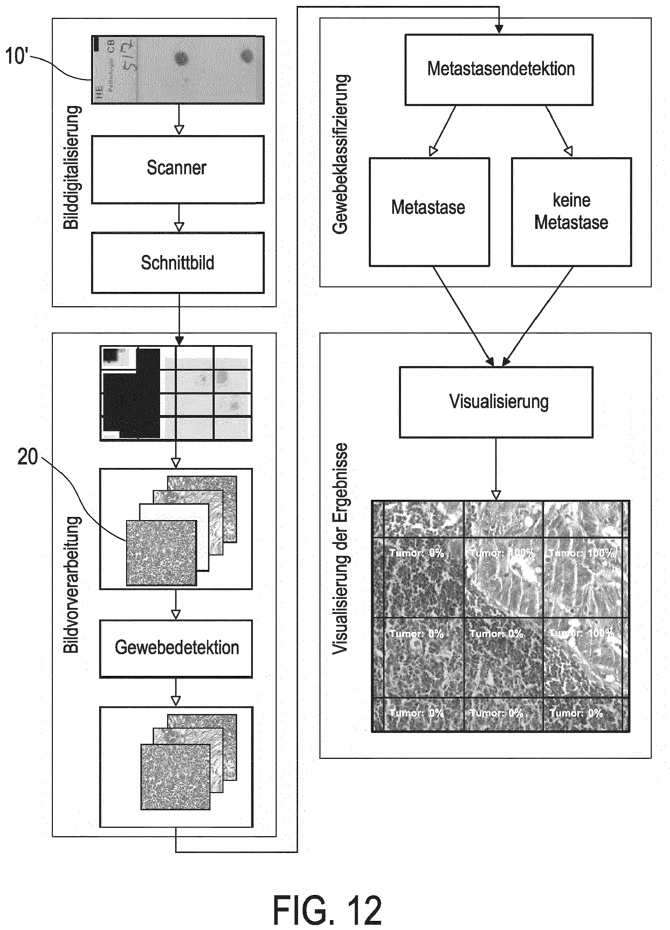

Fig. 12 ist ein beispielhaftes und schematisches Flussdiagramm zur übersichtlichen Darstellung des Gesamtprozesses, der zu der Anzeige von Schnittbildern 10, 10', in diesem Fall dem bereits aus Fig. 4 und 5 bekannten Schnittbild 10', unter Markierung von durch die Klassifizierungseinheit 102 als entartetes Gewebe 30 zeigend klassifizierten Bildbereichen 20 führt. In Fig. 12 von oben abwärts verlaufend, beginnt der Gesamtprozess mit der Erstellung eines jeweiligen Schnittbilds 10, 10' und dessen Digitalisierung beispielsweise mittels eines Whole-Slide-Scanners, wodurch oder worauf das Bild zur Befundung bereitgestellt wird. Nach etwaigen Vorverarbeitungen des Schnittbildes 10, 10`, die in dem dargestellten Fall auch dessen Unterteilung in Bildbereiche 20 umfasst, werden mittels des eigens hierfür trainierten künstlichen neuronalen Netzes (Gewebedetektor) Gewebe zeigende Bildbereiche 20 detektiert und die Menge der Bildbereiche 20 auf diese reduziert. Das in den verbleibenden Bildbereichen gezeigte Gewebe wird von dem eigens hierfür trainierten künstlichen neuronalen Netz (Gewebeklassifizierer) in entartetes und nicht entartetes Gewebe klassifiziert, wobei die Gewebeentartungen im dargestellten Fall Tumormetastasen entsprechen. Das Ergebnis der Klassifizierung wird für den Nutzer so visualisiert, dass er in dem Schnittbild 10, 10` leicht jene Gewebegebiete findet, die mit hoher Wahrscheinlichkeit Gewebeentartungen aufweisen. Um beispielsweise einen positiven Befund festzustellen, muss der Nutzer dann nur noch die Klassifizierung dieser Gebiete bestätigen.

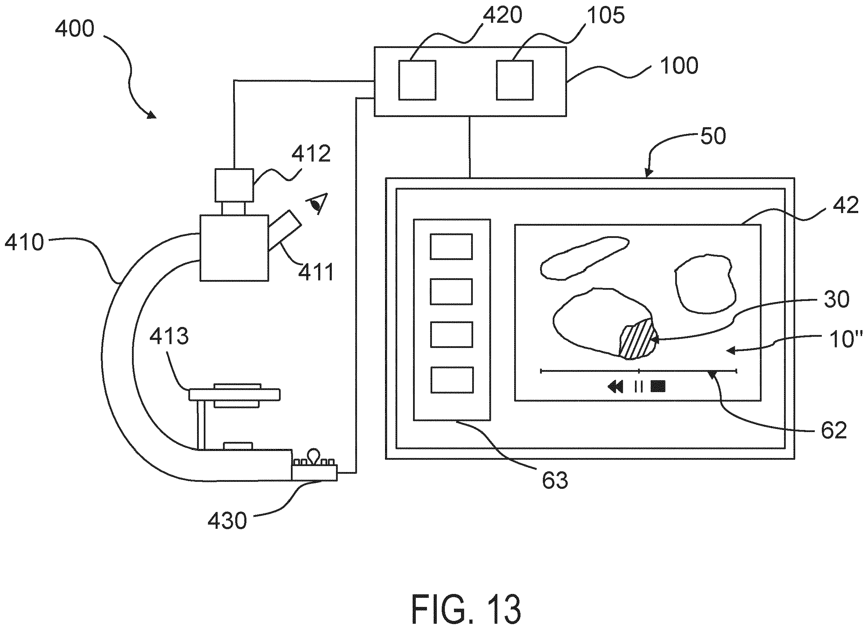

Fig. 13 zeigt beispielhaft und schematisch eine Ausführungsform zur "Live-Analyse" von Schnittbildern 10", die von einem Nutzer mittels eines manuell gesteuerten Lichtmikroskops 410 und einer daran angeschlossenen Digitalkamera 412 gewonnen werden. Das Mikroskop 412 weist eine Auflagefläche 413 auf, auf der Objektträger angeordnet werden können, auf denen jeweils ein Gewebeschnitt präpariert worden ist, wobei die Auflagefläche 401 durch den Nutzer über eine an dem Mikroskop 412 befestigte, mit einer Antriebseinheit des Mikroskops 412 verbundene Steuervorrichtung 430 vertikal und horizontal verfahrbar ist. Die Steuervorrichtung 430 kann zum Verfahren der Auflagefläche 401 beispielsweise einen Joystick aufweisen. Über ein Okular 411 des Mikroskops 412 kann der Nutzer jeweils von einer Optik des Mikroskops 412 fokussierte Gewebebereiche betrachten.

Während der Nutzer mit dem Mikroskop 410 durch verschiedene auf dem Objektträger präparierte Gewebebereiche navigiert, nimmt die Kamera 412 eine entsprechende Schnittbildsequenz auf, deren einzelne Schnittbilder 10" jenem entsprechen, was auch für den Nutzer zu einem jeweiligen Zeitpunkt über das Okular 411 sichtbar war. Die aufgenommene Schnittbildsequenz wird an das System 100 weitergegeben, insbesondere von der Bildbereitstellungseinheit 101 bereitgestellt. Die Anzeigeeinheit 103 ist eingerichtet, die bereitgestellte Schnittbildsequenz in einem Analysebereich 42 einer Anzeige 50 anzuzeigen. Die Übertragung der Schnittbildsequenz, die auch als Video verstanden werden kann, an die Anzeige 50 kann im Wesentlichen ohne Zeitverzögerung erfolgen, sodass auf der Anzeige 50 im Wesentlichen das angezeigt werden kann, was auch über das Okular 411 des Mikroskops 410 zu sehen ist. Der Nutzer kann aber auch die Möglichkeit haben, eine ansonsten fortlaufende Anzeige der Schnittbildsequenz anzuhalten oder in ihr hin- und herzuspringen. Hierzu kann die Anzeigeeinheit 103 eingerichtet sein, eine Zeitleiste mit entsprechenden Schaltflächen über den Analysebereich 42 zu legen. Eine solche Zeitleiste kann auch als Auswahlbereich 62 aufgefasst werden, da der Nutzer über sie einzelne Schnittbilder 10" der angezeigten Schnittbildsequenz auswählen, d. h. zur Anzeige bringen, kann.

Die Klassifizierungseinheit 102 ist auch in dieser Ausführungsform eingerichtet, Bildbereiche der bereitgestellten Schnittbilder 10", d. h. der einzelnen "Frames" der Schnittbildsequenz, mittels eines entsprechend trainierten neuronalen Netzes gemäß ihrer Wahrscheinlichkeit dafür zu klassifizieren, dass sie entartetes Gewebe 30 zeigen. Als entartetes Gewebe 30 klassifizierte Bildbereiche können dann auch in dieser Ausführungsform in dem Analysebereich 42 der Anzeige 50 entsprechend markiert angezeigt werden. Ferner weist das System 100 in dieser Ausführungsform allerdings eine Signalerzeugungseinheit 105 auf, die eingerichtet ist, die Steuervorrichtung 430 zu veranlassen, ein akustisches und/oder haptisches Signal zu erzeugen, dass durch den Nutzer wahrnehmbar ist, wenn erwährend der Navigation durch verschiedene Gewebebereiche mittels des Mikroskops 410 auf einen Gewebebereich stößt, in dem die Klassifizierungseinheit 102 entartetes Gewebe 30 erkannt hat. Wird also beispielsweise auf der Anzeige 50 ein Live-Mitschnitt dessen abgespielt, was der Nutzer über das Okular 411 sieht, kann eine Markierung des entarteten Gewebes zeitlich parallel zu einer akustischen/oder haptischen Hinweisgabe für den Nutzer erfolgen. Dies hat den Vorteil, dass der Nutzer den Blick nicht erst zur Anzeige 50 wenden muss, um auf wahrscheinlich entartete Gewebebereiche hingewiesen zu werden.

Neben einem Bedienelement wie einem Joystick zur Steuerung des Mikroskops 410 weist die Steuervorrichtung 430 vorzugsweise weitere Bedienelemente wie beispielsweise Knöpfe auf, mittels derer der Nutzer während des laufenden Mikroskopiervorgangs einzelne Schnittbilder der aufgenommenen Schnittbildsequenz gesondert abspeichern kann. Insbesondere kann ein durch Betätigung eines Bedienelement abgespeichertes Schnittbild also gerade jener Ansicht entsprechen, die der Nutzer zum Zeitpunkt der Betätigung des Bedienelemente durch das Okular 411 hat.

Beispielsweise kann der Nutzer ein von ihm wahrgenommenes akustisches und/oder haptischen Signal zum Anlass nehmen, an einem für ihn über das Okular 411 momentan sichtbaren Gewebebereich zu verweilen und diesen, etwa durch entsprechende optische Vergrößerung über das Mikroskop 410, genauer zu betrachten, um dann zu entscheiden, ob er der über das Signal vermittelten Klassifizierung des Bereichs durch die Klassifizierungseinheit zustimmt oder nicht. Stimmt er zu, kann er eine von ihm bevorzugte Ansicht des betreffenden Gewebebereichs abspeichern. Die Steuervorrichtung 430 kann insofern auch als Feststellungseinheit 104 verstanden werden, die eingerichtet ist, eine Gewebeentartung in einer Gewebeprobe basierend auf einer Nutzereingabe festzustellen, die indikativ für eine Bestätigung des Nutzers dessen ist, dass ein basierend auf einer Klassifizierung durch die Klassifizierungseinheit 102 markiert angezeigter Bildbereich entartetes Gewebe 30 zeigt

Verschiedene Bedienelemente der Steuervorrichtung 430 können für eine Speicherung in entsprechend verschiedenen Teilen eines hierfür vorgesehenen Dateisystems oder mit entsprechend verschiedenen Annotationen vorgesehen sein. Die Betätigung eines Bedienelements der Steuervorrichtung 430 kann auch als Nutzereingabe verstanden werden, und die dadurch abgespeicherten Schnittbilder 10" als Ausschnitte der jeweiligen Schnittbildsequenz. Für die Speicherung der durch den Nutzer mittels der Steuervorrichtung 430 aufgenommenen Schnittbilder 10" kann eine eigene Speichervorrichtung 420 vorgesehen sein, die in dieser Ausführungsform Teil des Systems 100 ist.

Diejenigen Schnittbilder 10" der aufgenommenen Sequenzen, in denen die Klassifizierungseinheit 102 entartete Gewebebereiche erkannt hat, und/oder die von dem Nutzer mittels der Steuervorrichtung 430 eigens abgespeicherten Schnittbilder 10" können in einer digitalen "Fallmappe" zusammengefasst werden, die auch als Protokoll bezeichnet werden könnte und in der Speichervorrichtung 420 abgespeichert sein kann. Diese Schnittbilder 10" können von der Anzeigeeinheit 103 in einem Auswahlbereich 63 der Anzeige 50 angezeigt werden. Über den Auswahlbereich 63 kann der Nutzer, wenn er seinen Blick auf die Anzeige 50 wendet, also zu zuvor abgespeicherten Schnittbildern 10" springen, die dann vorübergehend statt des "Live-Mitschnitts" in dem Analysebereich 42 angezeigt werden können.

Die Steuervorrichtung 430 kann insbesondere ein Bedienelement aufweisen, dessen Betätigung durch den Nutzer die Speichervorrichtung 420 veranlasst, ein Schnittbild 10", das zum Zeitpunkt der Betätigung einem von dem Nutzer betrachteten Gewebebereich entspricht, in einem für Trainingsdaten vorgesehenen Teil der Speichervorrichtung 420 abzuspeichern. Insbesondere die ersten Trainingsdaten, die von der Trainingsdaten-Bereitstellungseinheit 201, 301 zum Training des neuronalen Netzes bereitstellt werden, können in diesem Teil der Speichervorrichtung abgespeichert sein. Das Mikroskop 410, die Speichervorrichtung 420 und die Steuervorrichtung 430 können daher zusammen auch als ein System 400 zum Erzeugen von Trainingsdaten für ein künstliches neuronales Netz aufgefasst werden. Mittels dieses Systems 400 hat der Nutzer also die Möglichkeit, manuell durch eine Gewebeprobe zu navigieren und selektiv Ansichten auf das Gewebe für das Training des neuronalen Netzes auszuwählen, ohne dabei seinen Blick zwischen Okular 411 und einer separaten Anzeige wie beispielsweise einem neben dem Mikroskop 410 angeordneten Monitor hin und her zu wenden. Gleichzeitig wird der Nutzer beim Erkennen möglicherweise entarteter Gewebebereiche von dem System 100 unterstützt, indem er nicht nur visuell durch entsprechende Markierungen in der Anzeige 50, sondern über die Steuervorrichtung 430 auch akustische und/oder haptische Signale erhält.

Die beschriebenen Systeme und Verfahren erlauben neben einer Effizienzsteigerung, insbesondere wegen der Einbindung künstlicher Intelligenz, auch eine Standardisierung des Befundungsprozesses, die eine Qualitätssicherung bedeutet. Unter Effizienzsteigerung kann unter anderem eine bessere Ausnutzung von Aufmerksamkeit und Zeit verstanden werden. Dem Nutzer, der etwa ein Befunder sein kann, werden können gemäß den beschriebenen Ausführungsformen fokussiert und verlässlich die wichtigsten Gewebegebiete präsentiert werden. Die für die Beurteilung unwesentlichen Gebiete müssen nicht mehr manuell durchforstet werden. Aufmerksamkeit und Zeit können dadurch auf die wesentlichen Gebiete gerichtet werden, sodass in der selben Zeit mehr Objektträger bei gleichbleibender Belastung befundet werden können (oder, wahlweise, die Belastung des Befunders reduziert werden kann). Qualitätssicherung und Standardisierung stützen sich auf die konstante maschinelle Klassifizierungsleistung. Insbesondere die Möglichkeit des vorzeitiges "Abschließen" eines Objektträgers durch den Befunder, bevor er/sie alle suspekten Areale bewertet hat, kann die Befundung bei eindeutigen Fällen beschleunigen.

Während in der Literatur vollautomatisierte Verfahren zur Generierung großer Trainingsdatensätze beschrieben werden, bei denen ein CNN die Daten für ein zweites CNN extrahiert, oder GANs als wieder andere Form eines solchen Prozesses. Ein semi-automatisiertes Vorgehen erlaubt es aber, die Integrität der Trainingsdaten laufend zu kontrollieren. Im Bereich der Tumordiagnostik müssen alle potentiellen Fehlerquellen berücksichtigt und gelöst werden, was immer noch oft nur dem Menschen möglich ist.

Die Gewebeproben eines Falls können, in Vorbereitung der Digitalisierung in Form von Schnittbildern, zunächst makroskopisch durch eine medizinische Fachkraft ausgewertet, zugeschnitten und zur Fixierung in dafür vorgesehene Kassetten gelegt werden. Bei der makroskopischen Befundung kann in einer digitalen Fall-Akte eine Markierung (Flag) aktiviert werden, die die für das System wesentlichen Merkmale beschreibt, also eine Probe bspw. durch Attribute wie "Kolon" und "Lymphknoten" charakterisiert (eine Auswahl aus vordefinierte Markern/Flags ist möglich). Diese Markierung kann im späteren Verlauf der Analyse zur automatisierten Ausführung entsprechender Bearbeitungsschritte dienen.

Zur Aufbereitung der Gewebeproben bzw. Teilen davon ("Präparate") können diese in Paraffin eingebettet und chemisch fixiert werden. Die in Paraffin eingebetteten Präparate können mittels entsprechender Schneidevorrichtungen in dünnen Schichten abgetragen und auf Objektträgern aufgetragen werden. Diese können im weiteren Verlauf mittels Hämatoxylin-Eosin-Färbung (HE) eingefärbt werden, woraufhin sie zur mikroskopischen Befundung bereitgestellt werden können.

Die mittels Flags markierten Präparate können selektiert und in einem entsprechenden Scanner digitalisiert werden. Neu auf einem lokalen Speichermedium erstellbare Dateien mit den Scans können auf das Vorhandensein von Flag-Markierungen überprüft werden. Das nachgeschalteten Analyse-System kann mittels einer "notify"-Funktion über neue Dateien informiert werden. Entsprechend der registrierten Flag-Markierung kann das dafür vorgesehene Analyse-System gestartet und die Datei(en) übergeben werden.

Nach Extraktion der Gewebe enthaltenden Bildbereiche, und optional einer weiteren Verarbeitung durch Anwendungen eines oder mehrerer Filter, können die Bildbereiche in einem dezidierten Ordner registriert werden. Vorzugsweise werden die Bildbereiche bündelweise und/oder parallelisiert aus dem Ordner in einen flüchtigen Speicher geladen und so für die Analyse durch den Gewebeklassifizierer bereitgehalten. Dazu werden sie als Paare aus Bild-Datei und dazugehörigem Label oder Flag, also beispielsweise einer String-Variable, verknüpft. Die Bündel können dem Gewebeklassifizierer übergeben werden, optional parallelisiert.

Die Gesamtheit des als Gewebedetektor fungierenden künstlichen neuronalen Netzwerks, vom Input-Layer bis zum Output-Layer, wurde vorzugsweise im Vorfeld mithilfe eines spezifischen Datensatzes trainiert, d.h. es wurden die internen Parameter des Netzwerks mittels numerischer Verfahren optimiert.

Es kann vorgesehen sein, dass dem Nutzer beim Aufrufen eines Falls, also vor der Klassifizierung, zunächst alle gescannten Objektträger mit niedriger Auflösung in einer Übersicht zur Präselektion angezeigt werden. Der Nutzer kann dann zunächst alle validen Scans (d. h. unter anderem ohne auffällige Artefakte) auswählen und damit formal zur Analyse freigeben.

Obwohl gemäß den oben beschriebenen Ausführungsformen künstliche neuronale Netze zur Gewebedetektion und zur Gewebeklassifizierung verwenden werden, ist nicht ausgeschlossen, dass auch andere Modelle der künstlichen Intelligenz, insbesondere des maschinellen Lernens, für diese Aufgaben verwendet werden können. Zudem sind die beschriebenen Verfahren und System nicht nur auf Schnittbilder anwendbar, sondern ebenso auf andere zweidimensionale oder dreidimensionale Bilder.

Abwandlungen der vorliegend offenbarten Ausführungsformen werden vom Fachmann, nach einem Studium der Offenbarung einschließlich der Figuren und der Ansprüche, bei der Ausführung der beanspruchten Erfindung erkannt und realisiert werden.

In den Ansprüchen schließen die Wörter "aufweisen" und "umfassen" nicht andere Elemente oder Schritte aus und der unbestimmte Artikel "ein" schließt eine Mehrzahl nicht aus.

Eine einzelne Einheit oder Vorrichtung kann die Funktionen mehrerer Elemente durchführen, die in den Ansprüchen aufgeführt sind. Die Tatsache, dass einzelne Funktionen und Elemente in unterschiedlichen abhängigen Ansprüchen aufgeführt sind, bedeutet nicht, dass nicht auch eine Kombination dieser Funktionen oder Elemente vorteilhaft verwendet werden könnte.

Ein Computerprogramm kann auf einem geeigneten Medium, wie beispielsweise einem optischen Speichermedium oder Festkörpermedium (SSD), gespeichert oder verteilt werden, das zusammen oder als Teil von anderer Hardware bereitgestellt werden kann, oder aber auf andere Weise, wie beispielsweise über das Internet oder andere kabelgebundene oder kabellose Telekommunikationssysteme.

Die Bezugszeichen in den Ansprüchen sind nicht derart zu verstehen, dass der Gegenstand und der Schutzbereich der Ansprüche durch diese Bezugszeichen eingeschränkt ist.

Die Erfindung betrifft ein System zur Unterstützung eines Nutzers bei der bildbasierten Erkennung einer Gewebeentartung. Das System umfasst eine Bildbereitstellungseinheit, die eingerichtet ist, eines einer Mehrzahl an Schnittbildern einer Gewebeprobe bereitzustellen, und eine Klassifizierungseinheit, die eingerichtet ist, mittels eines trainierten künstlichen neuronalen Netzes Bildbereiche des Schnittbildes gemäß ihrer Wahrscheinlichkeit dafür zu klassifizieren, dass sie entartetes Gewebe zeigen. Zudem umfasst das System eine Anzeigeeinheit, die eingerichtet ist, das Schnittbild in einem Analysebereich einer Anzeige so anzuzeigen, dass Bildbereiche des Schnittbildes, die gemäß der Klassifizierung der Klassifizierungseinheit entartetes Gewebe zeigen, in dem im Analysebereich angezeigten Schnittbild markiert sind, und eine Feststellungseinheit, die eingerichtet ist, eine Gewebeentartung in der Gewebeprobe basierend auf einer Nutzereingabe festzustellen, die indikativ für eine Bestätigung des Nutzers dessen ist, dass einer der markierten Bildbereiche entartetes Gewebe zeigt.

## Patentansprüche

**1.** Ein System (100) zur Unterstützung eines Nutzers bei der bildbasierten Erkennung einer Gewebeentartung, wobei das System umfasst:
- eine Bildbereitstellungseinheit (101), die eingerichtet ist, eines einer Mehrzahl an Schnittbildern (10, 10', 10") einer Gewebeprobe bereitzustellen,
- eine Klassifizierungseinheit (102), die eingerichtet ist, mittels eines trainierten künstlichen neuronalen Netzes Bildbereiche (20) des Schnittbildes (10, 10'; 10") gemäß ihrer Wahrscheinlichkeit dafür zu klassifizieren, dass sie entartetes Gewebe (30) zeigen,
- eine Anzeigeeinheit (103), die eingerichtet ist, das Schnittbild (10, 10'; 10") in einem Analysebereich (40, 41; 42) einer Anzeige (50) so anzuzeigen, dass Bildbereiche (20) des Schnittbildes (10, 10'; 10"), die gemäß der Klassifizierung der Klassifizierungseinheit (102) entartetes Gewebe (30) zeigen, in dem im Analysebereich (40, 41; 42) angezeigten Schnittbild (10, 10'; 10") markiert sind, und
- eine Feststellungseinheit (104), die eingerichtet ist, eine Gewebeentartung in der Gewebeprobe basierend auf einer Nutzereingabe festzustellen, die indikativ für eine Bestätigung des Nutzers dessen ist, dass einer der markierten Bildbereiche (20) entartetes Gewebe (30) zeigt.

**2.** Das System (100) nach Anspruch 1, **dadurch gekennzeichnet, dass** die Bildbereitstellungseinheit (101) eingerichtet ist, die Mehrzahl an Schnittbildern (10, 10') der Gewebeprobe bereitzustellen, wobei die Klassifizierungseinheit (102) eingerichtet ist, mittels des trainierten künstlichen neuronalen Netzes in jedem der Schnittbilder (10, 10') der Gewebeprobe Bildbereiche (20) gemäß ihrer Wahrscheinlichkeit dafür zu klassifizieren, dass sie entartetes Gewebe (30) zeigen, wobei die Anzeigeeinheit (103) eingerichtet ist, in einem Auswahlbereich (60) der Anzeige (50) jeweils einem der Mehrzahl an Schnittbildern (10, 10') entsprechende Auswahlelemente (70) anzuzeigen und als das in dem Analysebereich (40) anzuzeigende Schnittbild (10, 10') dasjenige auszuwählen, das einem durch den Nutzer ausgewählten Auswahlelement (70) entspricht.

**3.** Das System (100) nach Anspruch 2, **dadurch gekennzeichnet, dass** die Anzeigeeinheit (103) eingerichtet ist, die den Schnittbildern (10, 10`) entsprechenden Auswahlelemente (70) in dem Auswahlbereich (60) nach einer den jeweiligen Schnittbildern (10, 10`) zugeordneten Relevanz geordnet anzuzeigen, wobei die Relevanz eines Schnittbildes (10, 10') anhand eines Relevanzparameters gemessen wird, der indikativ für einen Anteil der Bildbereiche (20) an dem jeweiligen Schnittbild (10, 10') ist, die gemäß der Klassifizierung der Klassifizierungseinheit (102) entartetes Gewebe zeigen.

**4.** Das System (100) nach einem der vorhergehenden Ansprüche, **dadurch gekennzeichnet, dass** die Anzeigeeinheit (103) eingerichtet ist, das Schnittbild (10, 10') in dem Analysebereich (40) so anzuzeigen, dass zusammenhängende Gebiete von Bildbereichen (20), die gemäß der Klassifizierung der Klassifizierungseinheit (102) entartetes Gewebe zeigen, über die Markierung der Bildbereiche (20) an sich hinaus markiert sind, wenn eine Größe des jeweiligen zusammenhängenden Gebiets eine Mindestgröße unterschreitet.

**5.** Das System (100) nach einem der vorhergehenden Ansprüche, **dadurch gekennzeichnet, dass** die Anzeigeeinheit (103) eingerichtet ist, basierend auf einer entsprechenden Nutzereingabe die Anzeige (50) zu veranlassen, von einer Probendarstellung (80), die den Analysebereich (40) und den Auswahlbereich (60) aufweist, in eine zu einem der Mehrzahl an Schnittbildern (10, 10') gehörige Schnittbilddarstellung (90, 90`) zu wechseln, wobei auch die Schnittbilddarstellung (90, 90`) einen Analysebereich (41) und einen Auswahlbereich (61) aufweist, wobei die Anzeigeeinheit (103) eingerichtet ist, in dem Auswahlbereich (61) der Schnittbilddarstellung (90, 90`) Auswahlelemente (71) anzuzeigen, die jeweils einem Gebiet des zu der Schnittbilddarstellung (90, 90`) gehörigen Schnittbilds (10, 10') entsprechen, das gemäß der Klassifizierung der Klassifizierungseinheit (102) entartetes Gewebe zeigt, und in dem Analysebereich (41) der Schnittbilddarstellung (90, 90`) dasjenige dieser Gebiete anzuzeigen, das einem durch den Nutzer ausgewählten Auswahlelement (71) in dem Auswahlbereich (61) der Schnittbilddarstellung (90, 90`) entspricht.

**6.** Das System (100) nach einem der Ansprüche 2 bis 5, **dadurch gekennzeichnet, dass** das System (100) ferner eine Kennzeichnungseinheit aufweist, die eingerichtet ist, für Schnittbilder (10, 10') und/oder Klassifizierungsergebnisse der Klassifizierungseinheit (102) für Schnittbilder (10, 10') einen Wert eines vorbestimmten Kennzeichnungsparameters zu bestimmen, wobei die Anzeigeeinheit (103) eingerichtet ist, den jeweiligen Schnittbildern (10, 10') entsprechende Auswahlelemente (70) in dem Auswahlbereich (60) der Probendarstellung (80) für den Nutzer sichtbar basierend auf dem jeweils bestimmten Wert des Kennzeichnungsparameters zu kennzeichnen.

**7.** Das System (100) nach einem der vorhergehenden Ansprüche, **dadurch gekennzeichnet, dass** a) die Bildbereitstellungseinheit (101) eingerichtet ist, Schnittbilder (10") einer mittels eines manuell steuerbaren Mikroskops (410) aufgenommenen Schnittbildsequenz bereitzustellen, während die Schnittbildsequenz aufgenommen wird, b) die Klassifizierungseinheit (102) eingerichtet ist, mittels des trainierten neuronalen Netzes Bildbereiche der bereitgestellten Schnittbilder (10") gemäß ihrer Wahrscheinlichkeit dafür zu klassifizieren, dass sie entartetes Gewebe zeigen, während die Schnittbildsequenz aufgenommen wird, und c) die Anzeigeeinheit (103) eingerichtet ist, die bereitgestellten Schnittbilder (10") zeitlich nacheinander in dem Analysebereich (42) der Anzeige (50) so anzuzeigen, dass Bildbereiche des jeweils angezeigten Schnittbildes (10"), die gemäß der Klassifizierung der Klassifizierungseinheit (102) entartetes Gewebe (30) zeigen, in dem im Analysebereich (42) angezeigten Schnittbild (10") markiert sind,
wobei das System (100) ferner aufweist:
- eine Signalerzeugungseinheit (105), die eingerichtet ist, ein akustisches und/oder haptisches, durch einen das Mikroskop (410) steuernden Nutzer wahrnehmbares Signal zu erzeugen, wenn die Anzeigeeinheit (103) einen Bildbereich markiert anzeigt, während die Schnittbildsequenz aufgenommen wird.

**8.** System (100) nach einem der vorhergehenden Ansprüche, **dadurch gekennzeichnet, dass** die Klassifizierungseinheit (102) eingerichtet ist, aus den Schnittbildern (10, 10') Gewebe zeigende Bildbereiche (20) zu extrahieren und mittels des trainierten künstlichen neuronalen Netzes lediglich Bildbereiche (20) innerhalb der extrahierten, Gewebe zeigenden Bildbereiche (20) der Schnittbilder (10, 10') gemäß ihrer Wahrscheinlichkeit dafür zu klassifizieren, dass sie entartetes Gewebe (30) zeigen.

**9.** System (100) nach einem der vorhergehenden Ansprüche, **dadurch gekennzeichnet, dass** die Schnittbilder (10, 10') histologische Bilder sind, wobei das künstliche neuronale Netz trainiert wurde, Bildbereiche (20) histologischer Bilder gemäß ihrer Wahrscheinlichkeit dafür zu klassifizieren, dass sie entartetes Gewebe (30) zeigen.

**10.** Das System (100) nach einem der vorhergehenden Ansprüche, **dadurch gekennzeichnet, dass** die Gewebeprobe einem Lymphknoten eines Patienten entnommen wurde und das zu erkennende entartete Gewebe (30) Gewebe einer möglichen Metastase eines kolorektalen Karzinoms ist, wobei das künstliche neuronale Netz anhand von Schnittbildern (10, 10') von Lymphknotengewebeproben trainiert wurde, die teilweise von Metastasen eines kolorektalen Karzinoms befallen waren.

**10.** Ein System (200) zum Erzeugen von Trainingsdaten für ein künstliches neuronales Netz, wobei das System (200) umfasst:
- eine Trainingsdaten-Bereitstellungseinheit (201), die eingerichtet ist, erste Trainingsdaten bereitzustellen, die in Paaren aus ersten Trainingseingangsdaten und zugehörigen ersten Trainingsausgangsdaten strukturiert sind, wobei die ersten Trainingseingangsdaten ersten Bildbereichen (21) von ersten Schnittbildern (10, 10') einer Vielzahl von Gewebeproben entsprechen, die teilweise Gewebeentartungen aufweisen, und die ersten Trainingsausgangsdaten bezüglich der ersten Bildbereiche (21) getroffenen Feststellungen entsprechen, ob diese entartetes Gewebe (30) zeigen,
- eine Netz-Bereitstellungseinheit (202), die eingerichtet ist, ein künstliches neuronales Netz bereitzustellen, das mit den ersten Trainingsdaten trainiert worden ist, entartetes Gewebe (30) zeigende Bildbereiche zu bestimmen, und
- eine Trainingsdaten-Erzeugungseinheit (203), die eingerichtet ist, zweite Trainingsdaten zu erzeugen, die in Paaren aus zweiten Trainingseingangsdaten und zugehörigen zweiten Trainingsausgangsdaten strukturiert sind, wobei die zweiten Trainingseingangsdaten zweiten Bildbereichen (22) der ersten und/oder zweiter Schnittbilder (10, 10') der Vielzahl von Gewebeproben entsprechen,
wobei die Trainingsdaten-Erzeugungseinheit (203) eingerichtet ist, als zweite Bildbereiche (22) solche Bildbereiche der ersten Schnittbilder (10, 10') auszuwählen, die mit solchen ersten Bildbereichen (21) überlappen, die gemäß den ersten Trainingsausgangsdaten entartetes Gewebe (30) zeigen, und/oder wobei die Trainingsdaten-Erzeugungseinheit (203) eingerichtet ist, mittels des trainierten künstlichen neuronalen Netzes in den zweiten Schnittbildern (10, 10`) Bildbereiche (21) zu bestimmen, die entartetes Gewebe (30) zeigen, und als zweite Bildbereiche (22) solche Bildbereiche der zweiten Schnittbilder (10, 10`) auszuwählen, die mit solchen Bildbereichen (21) der zweiten Schnittbilder (10, 10`) überlappen, für die mittels des trainierten künstlichen neuronalen Netzes bestimmt worden ist, dass sie entartetes Gewebe (30) zeigen, und
wobei die Trainingsdaten-Erzeugungseinheit (203) eingerichtet ist, dem bereitgestellten künstlichen neuronalen Netz die zweiten Bildbereiche (22) als Eingangsdaten zu übergeben und die zweiten Trainingsausgangsdaten basierend auf den daraufhin von dem bereitgestellten künstlichen neuronalen Netz ausgegebenen Ausgangsdaten und einer Nutzereingabe zu bestimmen, die indikativ für eine Bestätigung der von dem bereitgestellten künstlichen neuronalen Netz für die zweiten Bildbereiche (22) ausgegebenen Ausgangsdaten durch den Nutzer ist.

**11.** Das System (200) nach Anspruch 10, **dadurch gekennzeichnet, dass** die Trainingsdaten-Bereitstellungseinheit (201) eingerichtet ist, die ersten Trainingsdaten wenigstens teilweise basierend auf Nutzereingaben eines Nutzers in Bezug auf eine oder mehrere Schnittbildsequenzen bereitzustellen, die von dem Nutzer mittels eines Mikroskops (410) aufgenommen wurden, wobei die Nutzereingaben jeweils indikativ für einen Ausschnitt (10") der einen oder mehreren Schnittbildsequenzen sind und über eine in Reichweite des Mikroskops angeordnete Steuervorrichtung (430) vorgenommen wurden.

**12.** System (400) zum Erzeugen von Trainingsdaten für ein künstliches neuronales Netz, wobei das System umfasst:
- ein Mikroskop (410) mit einem Okular (411) zum Betrachten verschiedener Gewebebereiche eines auf einem Objektträger präparierten Gewebeschnitts durch einen Nutzer und einer Kamera (412) zum Aufnehmen von den betrachteten Gewebebereichen entsprechenden Schnittbildern (10"),
- eine Speichervorrichtung (420) zum Speichern der von der Kamera (412) aufgenommenen Schnittbilder (10"), und
- eine Steuervorrichtung (430) mit wenigstens einem Bedienelement, die eingerichtet ist, bei Betätigung des wenigstens einen Bedienelements durch den Nutzer die Speichervorrichtung (420) zu veranlassen, ein von der Kamera (412) aufgenommenes Schnittbild (10"), das einem von dem Nutzer betrachteten Gewebebereich entspricht, in einem für Trainingsdaten vorgesehenen Teil der Speichervorrichtung (430) zu speichern.

**13.** Ein System (300) zum Trainieren eines künstlichen neuronalen Netzes, wobei das System (300) umfasst:
- eine Trainingsdaten-Bereitstellungseinheit (301), die eingerichtet ist, erste Trainingsdaten bereitzustellen, die in Paaren aus ersten Trainingseingangsdaten und zugehörigen ersten Trainingsausgangsdaten strukturiert sind, wobei die ersten Trainingseingangsdaten ersten Bildbereichen (21) von ersten Schnittbildern (10, 10') einer Vielzahl von Gewebeproben entsprechen, die teilweise Gewebeentartungen aufweisen, und die ersten Trainingsausgangsdaten bezüglich der ersten Bildbereiche (21) getroffenen Feststellungen entsprechen, ob diese entartetes Gewebe (30) zeigen,
- eine Netz-Bereitstellungseinheit (302), die eingerichtet ist, das zu trainierende künstliche neuronale Netz bereitzustellen,
- eine Trainingseinheit (303), die eingerichtet ist, das zu trainierende künstliche neuronale Netz vorläufig so zu trainieren, dass das vorläufig trainierte künstliche neuronale Netz, wenn es die ersten Trainingseingangsdaten als Eingangsdaten erhält, Ausgangsdaten ausgibt, die den zu den erhaltenen ersten Trainingseingangsdaten gehörigen ersten Trainingsausgangsdaten entsprechen, und
- eine Trainingsdaten-Erzeugungseinheit (304), die eingerichtet, zweite Trainingsdaten zu erzeugen, die in Paaren aus zweiten Trainingseingangsdaten und zugehörigen zweiten Trainingsausgangsdaten strukturiert sind, wobei die zweiten Trainingseingangsdaten zweiten Bildbereichen (22) der ersten und/oder zweiter Schnittbilder (10, 10`) der Vielzahl von Gewebeproben entsprechen,
wobei die Trainingsdaten-Erzeugungseinheit (304) eingerichtet ist, als zweite Bildbereiche (22) solche Bildbereiche der ersten Schnittbilder (10, 10') auszuwählen, die mit solchen ersten Bildbereichen (21) überlappen, die gemäß den ersten Trainingsausgangsdaten entartetes Gewebe (30) zeigen, und/oder wobei die Trainingsdaten-Erzeugungseinheit (304) eingerichtet ist, mittels des vorläufig trainierten künstlichen neuronalen Netzes in den zweiten Schnittbildern (10, 10`) Bildbereiche (21) zu bestimmen, die entartetes Gewebe (30) zeigen, und als zweite Bildbereiche (22) solche Bildbereiche der zweiten Schnittbilder (10, 10`) auszuwählen, die mit solchen Bildbereichen (21) der zweiten Schnittbilder (10, 10') überlappen, für die mittels des vorläufig trainierten künstlichen neuronalen Netzes bestimmt worden ist, dass sie entartetes Gewebe (30) zeigen, und
wobei die Trainingsdaten-Erzeugungseinheit (304) eingerichtet ist, dem vorläufig trainierten künstlichen neuronalen Netz die zweiten Bildbereiche (22) als Eingangsdaten zu übergeben und die zweiten Trainingsausgangsdaten basierend auf den daraufhin von dem vorläufig trainierten künstlichen neuronalen Netz ausgegebenen Ausgangsdaten und einer Nutzereingabe zu bestimmen, die indikativ für eine Bestätigung der von dem vorläufig trainierten künstlichen neuronalen Netz für die zweiten Bildbereiche (22) ausgegebenen Ausgangsdaten durch den Nutzer ist,
wobei die Trainingseinheit (303) eingerichtet ist, das vorläufig trainierte künstliche neuronale Netz ergänzend so zu trainieren, dass das ergänzend trainierte künstliche neuronale Netz, wenn es die ersten und/oder zweiten Trainingseingangsdaten als Eingangsdaten erhält, Ausgangsdaten ausgibt, die den zu den erhaltenen ersten und/oder zweiten Trainingseingangsdaten gehörigen ersten und/oder zweiten Trainingsausgangsdaten entsprechen,
wobei das System (300) vorzugsweise **dadurch gekennzeichnet ist, dass** die Trainingsdaten-Bereitstellungseinheit (304) ferner eingerichtet ist, erste Validierungsdaten bereitzustellen, die in Paaren aus ersten Validierungseingangsdaten und zugehörigen ersten Validierungsausgangsdaten strukturiert sind,
wobei a) die ersten Validierungsdaten einem Teil der ersten Trainingsdaten entsprechen, der nicht von der Trainingseinheit (303) zum Training verwendet wird, oder wobei b) die ersten Validierungseingangsdaten dritten Bildbereichen von Schnittbildern (10, 10`) einer Vielzahl von Gewebeproben entsprechen, die teilweise Gewebeentartungen aufweisen, und die ersten Validierungsausgangsdaten bezüglich der dritten Bildbereiche getroffenen Feststellungen entsprechen, ob diese entartetes Gewebe (30) zeigen,
wobei die Trainingseinheit (303) eingerichtet ist, das vorläufige Training durchzuführen, bis das künstliche neuronale Netz, wenn es die ersten Validierungseingangsdaten als Eingangsdaten erhält, Ausgangsdaten ausgibt, die in Bezug auf die ersten Validierungsausgangsdaten eine vorbestimmte Genauigkeit aufweisen,
und wobei das System (300) vorzugsweise ferner **dadurch gekennzeichnet ist, dass** die vorbestimmte Genauigkeit anhand eines Genauigkeitsmaßes gemessen wird, das über alle Validierungseingangsdaten definiert ist, wobei das Genauigkeitsmaß jenen Validierungsdatenpaaren ein höheres Gewicht zumisst, für die die getroffenen Feststellungen anzeigen, dass der jeweilige Bildbereich entartetes Gewebe (30) zeigt, als jenen Validierungsdatenpaaren, für die die getroffenen Feststellungen anzeigen, dass der jeweilige Bildbereich kein entartetes Gewebe (30) zeigt.

**14.** Ein Verfahren (1100) zur Unterstützung eines Nutzers bei der bildbasierten Erkennung einer Gewebeentartung, wobei das Verfahren (1100) umfasst:
- Bereitstellen (1101) eines einer Mehrzahl an Schnittbildern (10, 10') einer Gewebeprobe,
- Klassifizieren (1102) von Bildbereichen (20) des Schnittbildes (10, 10') gemäß ihrer Wahrscheinlichkeit dafür, dass sie entartetes Gewebe (30) zeigen, mittels eines trainierten künstlichen neuronalen Netzes,
- Anzeigen (1103) des Schnittbilds (10, 10') in einem Analysebereich (40) einer Anzeige (50) so, dass Bildbereiche (20) des Schnittbildes (10, 10'), die gemäß der Klassifizierung entartetes Gewebe (30) zeigen, in dem im Analysebereich (40) angezeigten Schnittbild (10, 10') markiert sind, und
- Feststellen (1104) einer Gewebeentartung in der Gewebeprobe basierend auf einer Nutzereingabe, die indikativ für eine Bestätigung des Nutzers dessen ist, dass einer der markierten Bildbereiche (20) entartetes Gewebe (30) zeigt.

**15.** Ein Computerprogramm zur Unterstützung eines Nutzers bei der bildbasierten Erkennung einer Gewebeentartung, wobei das Computerprogramm Befehle umfasst, die, wenn das Computerprogramm auf dem System (100) nach einem der Ansprüche 1 bis 10 ausgeführt wird, das System (100) dazu veranlassen, das Verfahren (1100) nach Anspruch 14 auszuführen.
